# EUROPÄISCHE PATENTSCHRIFT

(11) **EP 2 463 162 B1**
(45) Veröffentlichungstag und Bekanntmachung des Hinweises auf die Patenterteilung: **30.03.2016**
(21) Anmeldenummer: 11009571.8
(22) Anmeldetag: 03.12.2011
(51) Int. Cl.: B60S 5/06, B60L 11/18

(54) **System zur Energieversorgung von Elektrofahrzeugen**
System for supplying energy for electric vehicles
Système d'alimentation en énergie de véhicules électriques

(30) Priorität: 07.12.2010 DE 102010053600; 23.11.2011 DE 102011119210
(43) Veröffentlichungstag der Anmeldung: 13.06.2012
(73) Patentinhaber: Carbike GmbH, 88131 Lindau (DE)
(72) Erfinder: Löhr, Edgar, 88131 Lindau (DE); Löhr, Valentin, 88131 Lindau (DE)

(56) Entgegenhaltungen:
- EP-A1- 2 157 637
- EP-A1- 2 230 142
- EP-A2- 2 011 761
- WO-A2-2010/005052
- WO-A2-2010/046744
- AU-A1- 2008 200 543
- DE-A1-102006 047 654
- DE-A1-102008 036 595
- DE-U1-202009 009 688
- US-A1- 2009 252 994
- US-A1- 2009 314 382
- US-A1- 2010 291 427

## Beschreibung

Das System des Batteriewechsels hat bei Elektrofahrzeugen eine Reihe von Vorteilen: Es müssen keine privaten Zusatzinvestitionen für die Infrastruktur gemacht werden, der Tankvorgang geht ähnlich schnell wie gewohnt und das Fahrzeug kann ohne Batterie verkauft werden, wodurch es mit einem Preis deutlich unter dem des vergleichbaren Modells mit konventionellem Antrieb angeboten werden kann. Voraussetzung für eine flächendeckende Etablierung dieses Systems ist aber, dass sich die Fahrzeugindustrie auf Standards zum Batterietyp einigt. Außerdem dürfen die Batteriewechselstationen nicht zu teuer sein.

Das Unternehmen Better Place ist mit hohem Kapitalaufwand gerade dabei, in ausgewählten Regionen ein Batteriewechselsystem anzubieten, das allerdings relativ teuer und wenig flexibel ist und daher von großen Teilen der Autoindustrie kritisiert wird. Für Batteriewechselstationen wurden in der Vergangenheit zahlreiche technische Ausführungen und Betriebsverfahren vorgeschlagen. Dabei kann man die Verfahren nach der Richtung des Batteriewechsels relativ zum Fahrzeug klassifizieren. Die größte Bedeutung haben der seitliche Austausch, wie er bei Gabelstaplern und Bussen praktiziert wird und der unterflurige Austausch bei Autos. Beide Systeme haben gegenüber dem frontseitigen- oder heckseitigen Austausch den Vorteil, dass die zu betankenden Fahrzeuge nicht rangieren müssen, sondern die Batteriewechselstation in einer einzigen Fahrtrichtung durchfahren. Beispiele für einen unterflurigen Austausch sind in den Patentanmeldungen US020090314382A1, CN000101559758A, DE202008011762U1 und US000005612606A offenbart.

Nachteile aller Unterflursysteme sind der damit verbundene, ganz erhebliche bauliche und technische Aufwand, der hohe Schmutzeintrag in die Batteriewechselstation, die schwierige Fixierung der Batterien im Fahrzeugboden, die Schwächung der Fahrzeugstruktur, insbesondere bei großformatigen Batterien, die Verringerung der Bodenfreiheit und die hohe Gefährdung der Batterien durch Aufsetzen oder Steinschlag.

Zur Vermeidung der Nachteile des Unterflursystems ist ein seitlicher Austausch vorgesehen.

Beispiele für einen seitlichen Austausch sind beschrieben in den Patentschriften US00000T201384B2, US020090198372A1, JP002003226142A, WO002008123543A1. Der seitliche Austausch erleichtert die geschützte Unterbringung der Batterie im Fahrzeug und verringert den baulichen Aufwand erheblich, da er ebenerdig und ohne Gruben stattfinden kann. Außerdem wird das vertikal unter dem Fahrzeug arbeitende Hubgerät überflüssig. Zudem bietet er ein höheres Flexibilisierungspotential. In US000007201384B2 ist ein Batteriewechselsystem für Pkw beschrieben, das die Batterie seitlich im Schwellerbereich austauschen kann und bei dem die Batterie zugleich die der Straße zugewandte Fläche des Fahrzeugs ist. Damit ist die Batterie Verschmutzungen und Steinschlag ebenso ausgesetzt wie bei unterflurigen Systemen. Der dort gemachte Vorschlag, das Gehäuse der Batterie so stabil auszubilden, dass es wesentliche Teile der Karosseriekräfte aufnehmen kann, führt zu einem recht schweren und teuren Batteriemodul und zu einer schwierigen Verbindungsaufgabe von Fahrzeug und Batterie.

Ein System, das diesen Nachteil vermeidet, ist in WO002008123543A1 beschrieben. Dort werden Batterien unter den Vorder- und Rücksitzen des Fahrzeugs untergebracht und sie sind nach dem Öffnen der Fahrzeugtür und einer Klappe von der Seite aus zugänglich. Als Hilfsmittel zum Batterietausch wird ein in der Höhe verstellbarer Rollwagen eingesetzt, mit dem die Batterien zum Regallager transportiert werden, wo sie mittels eines Kranes in die Ladeplätze gehievt werden. Dabei muss der Fahrer oder das Servicepersonal die Batterien aus dem Fahrzeug herausziehen, zum Kran transportieren und dort in die Ladebucht einschieben und den umgekehrten Vorgang mit der vollen Batterie wiederholen. Dies ist unbequem und zeitraubend. Auch stehen nur zwei Batterieplätze im Fahrzeug zur Verfügung, was die verfügbare Batterieleistung einschränkt. Nachteilig ist auch, dass die Fahrzeugtüren zum Batteriewechsel geöffnet werden müssen.

Alle beschriebenen Systeme erfordern feste Einbauten, oberirdisch und teilweise auch unterirdisch. Gerade in der Umstellungsphase auf Elektromobilität ist es wichtig, keinen zu hohen baulichen Aufwand treiben zu müssen, da oft nicht klar ist, wie sich die lokale Nachfrage entwickeln wird. Zur Reduzierung des Risikos von Fehlinvestitionen wäre es wünschenswert, eine Art Plug & Play-System zur Verfügung zu haben, das einen geringen Aufbauaufwand und ebenso einen geringen Abbauaufwand besitzt. Am Beispiel des sich in der Testphase befindlichen Systems von Better Place zeigt sich, dass vor allem der hohe Investitionsaufwand und die geringe Flexibilität Ursache für die große Skepsis sind, mit der weite Teile der Fahrzeugindustrie auf die Idee der Batteriewechselstation (1) blicken.

Mit der eigenen Patentanmeldung DE 10 2008 036 595 A1 ist ein System zur Energieversorgung von Elektrofahrzeugen bekannt geworden, bei dem die Wechselbatterien dem Kraftfahrzeug seitlich zugeführt werden. Die Batteriemodule bestehen aus einzelnen Batterieeinheiten, wobei je nach Fahrzeuggröße verschieden große Batteriemodule verwendet werden. Dabei ist jedes Batteriemodul aus mehreren gleichen Batterieeinheiten zusammengebaut.

Die Beladung und Entnahme der Batteriemodule nach der eigenen Druckschrift erfolgt über eine Entnahmevorrichtung, die als Speichermagazin ausgebildet ist. Sie beinhaltet eine rotierenden Trommel, in der die Batteriemodule am Außenumfang in Boxen angeordnet sind und seitlich in diese eingelagert oder aus diesen entnommen werden können. Jedes Batteriemodul weist an seiner Unterseite Rollen auf, wobei die Batteriemodule mit Hilfe eines Teleskoparmes aus dem Batteriespeicher entnommen werden und in das zu beladende Fahrzeug eingeschoben werden bzw. umgekehrt.

Nachteil der genannten Anordnung ist jedoch, dass, da für jeden Fahrzeugtyp unterschiedlich große Batteriemodule benötigt werden, jeweils pro Fahrzeugtyp ein geometrisch passender, eigener Batteriemodulspeicher vorgesehen werden muss. Dies ist mit einem hohen Aufwand verbunden. Die Anordnung zweier Teleskoparme, die längsverschiebbar parallel zur Drehachse des Batteriemodulspeichers ausgebildet sind und die die Batteriemodule seitlich bis an die Hinterkante umgreifen, erfordert einen hohen Maschinenaufwand und ist störungsempfindlich bei ungenauer Positionierung des Fahrzeugs. An eine Anpassung des Teleskoparmes an verschiedene Fahrzeugtypen mit entsprechend unterschiedlichen Größen der Batteriemodule und an einen Ausgleich von Fluchtungsfehlern ist nicht gedacht. Ferner erfordert der seitliche Umgriff der Teleskoparme zusätzlichen Bauraum im Fahrzeug.

Der Erfindung liegt deshalb die Aufgabe zugrunde, ein System zur Energieversorgung von Elektrofahrzeugen zu schaffen, bei dem der Batteriewechsel wesentlich verbessert, flexibilisiert und vereinfacht ist und bei dem die Komponenten Batteriewechselstation, Wechseleinrichtung und Fahrzeug optimal aufeinander abgestimmt sind.

Es sollen ferner die Leistungsfähigkeit und die Zuverlässigkeit erhöht und zugleich die Kosten gesenkt werden und es sollen sowohl auf der Fahrzeugseite als auch beim Thema Zweitnutzung und Recycling entscheidende Fortschritte bezüglich einer Vereinfachung und Vereinheitlichung der Systemkomponenten geschaffen werden. Insbesondere geht es darum, verschiedene Fahrzeugklassen, die unterschiedlich große Energiespeicher besitzen, und sowohl rechtsgelenkte als auch linksgelenkte Fahrzeuge mit standardisierten Batteriemodulen und mit ein und derselben Vorrichtung bedienen zu können, bei einer gleichzeitigen Reduktion des apparativen Aufwandes und des Flächenbedarfs, da nur kostengünstige und kompakte Anlagen die Chance haben, rasch Verbreitung zu finden.

Gelöst wird die Aufgabe durch die Merkmale der unabhängigen Ansprüche 1, 2 und 3. Weitere Verbesserungen und Ausführungsformen sind in den Unteransprüchen formuliert.

Im Mittelpunkt des unabhängigen Anspruches 1 steht die Beschreibung eines neuartigen Verfahrens, bei dem standardisierte Batteriemodule flexibel für verschiedene Fahrzeugtypen verwendet werden können. Die Batteriemodule werden deshalb in der Batteriewechselstation je nach Fahrzeugtyp zu in Leistungsfähigkeit und Anzahl passenden Batteriesätzen zusammengestellt, wobei jedoch wesentlich ist, dass sie erst nach dem Einsetzen ins Fahrzeug untereinander über fahrzeugseitige Kontakte elektrisch verbunden werden. Man kann aus dem Batterielager beliebige Batteriesätze unterschiedlicher Größe und Leistungsfähigkeit zusammen stellen, ohne verschieden große Batterien im Batterielager vorhalten zu müssen.

Im Gegensatz zur US 2009/0198372 A1 werden die Batteriemodule nach der vorliegenden Erfindung gleichzeitig im Fahrzeug entladen, während diese Druckschrift eine nacheinander folgende Entladung von jeweils vier Batteriemodulen zeigt, die durch den Memory-Effekt bei Nickel-Cadmium-Batterien begründet war. Damit besteht dort der Nachteil, dass die Batteriemodule erst nacheinander folgend bis zur Tiefentladung entladen werden, was bei neuartigen Batterien nicht mehr notwendig, ja sogar abträglich ist, und der Nachteil, dass für jede Fahrzeugklasse verschieden große Batteriemodule verwendet werden müssen.

Wichtig beim geltenden Verfahrensanspruch 1 ist also eine flexible Zusammenstellung von Batteriemodulen, die voneinander vollkommen unabhängig sind und die auch von verschiedenen Ladeplätzen aus der Batteriewechselstation entnommen werden können und erst individuell vor dem Beladen des Fahrzeuges zu Batteriesätzen passender Größe und Qualität zusammengestellt werden.

Gegenstand des abhängigen Verfahrensanspruches 2 ist der Betrieb einer neuartigen Wechseleinrichtung, welche aus mindestens einem mehrachsigen Roboter besteht, der jeweils an die Stirnseite der Batteriemodule kuppelt. Dazu ist die Wechseleinrichtung mit einer sensorgestützten Lageerkennung ausgestattet, die die Position und Ausrichtung des Fahrzeuges und des Entnahmefaches erkennt und mit deren Hilfe sich der Roboterarm auf das Fahrzeug und die einzelnen Batteriemodule ausrichtet. Die Wechseleinrichtung besitzt eine in mindestens drei Achsen bewegliche Aufnahmevorrichtung, die mehrere Batteriemodule aufnimmt und transportiert.

Ferner ist wesentlich, dass die Fluchtungsfehler zwischen dem stehenden Fahrzeug und der Wechseleinrichtung über die mehrachsige Lageanpassung der Wechseleinrichtung ausgeglichen werden, ohne dass dabei das Fahrzeug gegenüber der Wechseleinrichtung ausgerichtet, verdreht oder verschoben werden muss. Dies ist eine besonders einfache Möglichkeit, eine Wechseleinrichtung zu betreiben, ohne dass es aufwendiger mechanischer Ausrichtvorrichtungen für das Fahrzeug, wie z.B. in WO 002010033883A1 vorgesehen, bedarf.

Bei der Verwendung eines mehrachsigen Roboters, z.B. ein Knickarmroboter, besteht der vorher genannte Vorteil, dass mit einer solchen Wechseleinrichtung eine individuelle Zusammenstellung und Zuführung von Batteriemodulen vom Übergabetisch zum Fahrzeug und umgekehrt erfolgen kann, und dass ein schneller und zuverlässiger Wechselvorgang mit bewährter Technik erreicht wird.

Der Übergabetisch fährt in das Batterielager ein und übernimmt nach Vorgabe der Steuerungseinheit im Batterielager die neu zusammenzustellenden Batteriemodule und fährt diesen Batteriesatz vor die Aufnahmeräume des Fahrzeuges. Der Roboter koppelt dann an die auf dem Übergabetisch bereit liegenden Batteriemodule und schiebt sie in die Aufnahmeräume des Fahrzeuges.

Ein wesentliches Merkmal des abhängigen Anspruches 3, der eine Batteriewechselstation und ein Verfahren zu ihrem Betrieb betrifft, ist, dass jedes Batteriemodul in der Batteriewechselstation in einem Regallager auf einzelnen Ladeplätzen mit separater Stromversorgung und einem jedem Ladeplatz einzeln zugeordneten und einzeln geregelten Ladegerät platziert ist.

Es wird also die übliche Parallelladung von Batteriesätzen vermieden und es wird jedes Batteriemodul individuell aufgeladen, was mit dem Vorteil verbunden ist, dass nur teilweise entladene Batteriemodule individuell unterschiedlich von vollständig entladenen Batteriemodulen aufgeladen werden können. Ein teilentladenes Batteriemodul benötigt eine kürzere Ladezeit als ein vollständig entladenes Batteriemodul. Auf diese Weise ist es nach dem Gegenstand des Anspruches 3 möglich, die jeweiligen Ladegeräte in Spannung und Stromstärke genau an die Lade- oder Entladesituation des jeweilig zugeordneten Batteriemoduls anzupassen.

Ferner ist wesentlich, dass die Einlagerung der Batteriemodule individuell nach freien Plätzen erfolgt und ihre Ausgabe nach Ladezustand und nach optimal passender Leistungsfähigkeit innerhalb eines aus mehreren Batteriemodulen bestehenden Batteriesatzes erfolgt. Es findet also kein Umschlag nach dem Prinzip First-In-First-Out statt, wie er in anderen Systemen, insbesondere in solchen mit einer stetigen Förderung der Batterien in beweglichen Magazinen angewandt wird. Mit dem neuen Verfahren wird die Ausgabeleistung der Batteriewechselstation erheblich erhöht.

Ferner ist wesentlich, dass die Batteriemodule erst durch die fahrzeugseitigen Kontakte zur Fahrzeugbatterie elektrisch verbunden werden. Dadurch ist es möglich, relativ hohe Zwischenkreisspannungen im Fahrzeug aufzubauen ohne die vergleichsweise ungefährliche Kleinspannungsgrenze von 120 V DC bei den Batteriemodulen bzw. nur 60 V DC zwischen den zwei Kontaktpaaren eines Moduls zu überschreiten.

Dokument US-2010/0291427A offenbart ein Verfahren gemäß dem ersten Teil des Anspruchs 1.

Erfindungsgemäß wird vorgeschlagen, ein System zur Energieversorgung von Elektrofahrzeugen bestehend aus
1. Fahrzeugen (2), die Wechselbatterien im Bereich zwischen den Radachsen und etwa auf Höhe der Radachsen aufnehmen können,
2. aus Wechselbatterien,
3. aus mindestens einer Batteriewechselstation (1) mit integrierter Batterieladung
4. aus mindestens einer automatisierten Wechsel- und Transporteinrichtung für den Wechsel und Transport der Batterien, wobei die Entnahme der Batterien aus dem Fahrzeug (2) durch die Wechseleinrichtung (5) seitlich, also in Querrichtung des Fahrzeugs (2) erfolgt, und
5. aus mindestens einem Batterielager zur Aufbewahrung und Ladung der Wechselbatterien,
mit folgenden Merkmalen auszustatten:
1. die elektrische Energie wird in länglichen Batteriemodulen (6) gespeichert, die in Querrichtung des Fahrzeugs, aber parallel zur Austauschrichtung orientiert sind,
2. die Entnahme der Batteriemodule (6) erfolgt beim Wechselvorgang von der gleichen Fahrzeugseite aus wie das Einsetzen in das Fahrzeug (2)
3. je nach Fahrzeugtyp sind ein oder mehrere Aufnahmeräume für die Batteriemodule vorhanden, in die jeweils eines dieser Batteriemodule (6) eingeschoben wird, wobei die Bodenflächen des oder der Aufnahmeräume die Batteriemodule (6) vor fahrbahnseitigen Belastungen schützen und wobei die Deck- oder auch die Wandflächen die Batteriemodule vom Fahrgast- oder Laderaum trennen,
4. die Batteriemodule sind nach dem Öffnen einer oder mehrerer Klappen oder Türen von der Seite her zugänglich, wobei diese im Bereich des Seitenschwellers oder im Fahrzeugboden angebracht sind,
5. die Fahrzeugbatterie besteht je nach Fahrzeugtyp aus einem oder aus mehreren dieser länglichen Batteriemodule (6), wobei die Batteriemodule (6) erst nach dem Einsetzen ins Fahrzeug (2) untereinander über fahrzeugseitige Kontakte (20) elektrisch verbunden sind,
6. die Wechseleinrichtung (5) richtet sich mit Hilfe einer sensorgestützten Lageerkennung am Fahrzeug aus und kuppelt an oder nahe der zur ihr hin weisenden Stirnfläche der Batteriemodule (6),
7. die in den Batteriemodulen(6) enthaltene Energie wird im Fahrzeug (2) gleichzeitig entnommen,
8. die Batteriemodule (6) sind voneinander unabhängig und können im System beliebig zu neuen Batteriesätzen zusammengestellt werden,
9. die Batteriemodule (6) sind im Batterielager auf einzelnen Ladeplätzen mit separater Kontaktierung platziert, wobei das Batterielager als Regallager (41) ausgeführt ist,
10. zur Ausgabe in das Fahrzeug werden diejenigen Batteriemodule aus dem Regallager (41) entnommen und zu einem neuen Batteriesatz zusammengestellt, die in ihrem Ladungszustand und in ihrer Leistungsfähigkeit am besten zueinander passen,
11. die Wechsel- und Transporteinrichtung besitzt eine in mindestens drei Achsen bewegliche Aufnahmevorrichtung, die mehrere Batteriemodule (6) aufnehmen und transportieren kann,
12. Fluchtungsfehler zwischen stehendem Fahrzeug (2) und Wechseleinrichtung (5) werden über die geometrische Form der Batteriemodule (6) oder über eine mehrachsige Lageanpassung der Wechseleinrichtung (5) ausgeglichen ohne das Fahrzeug (2) aktiv zu verdrehen oder zu verschieben.

Die Erfindung wird durch die Kombination aus einem oder mehreren der oben genannten Merkmale verwirklicht, wobei jedwede Kombination der Merkmale untereinander oder jedes Merkmal in Alleinstellung als erfindungswesentlich beansprucht wird.

Mit diesen Merkmalen bietet das erfindungsgemäße System zur Energieversorgung von Elektrofahrzeugen die wesentlichen Voraussetzungen für die flexible Energieversorgung verschiedener Fahrzeugtypen und für einen sicheren und kostengünstigen Betrieb von Batteriewechselstationen: Standardisierbarkeit, Modularität, günstige Form und Orientierung der Batteriemodule, sichere Unterbringung im Fahrzeug, einfacher, sicherer und automatisierbarer Austauschvorgang, Lagerung und Ladung auf ortsfesten Plätzen und relativ einfacher Ausgleich von Fluchtungsfehlern.

Der Vorgang des Batteriewechsels findet in folgenden Schritten statt: Das Fahrzeug (2) fährt in eine zum Batteriewechsel günstige Position an die

Batteriewechselstation (1) heran, die Klappe (30, 79) wird geöffnet, die Wechseleinrichtung (5) fährt die Aufnahmevorrichtung seitlich nahe an das Fahrzeug (2) heran, die Wechseleinrichtung (5) richtet sich auf die Batteriemodule (6) aus und kuppelt an ihrer Stirnseite an, die Aufnahmevorrichtung wird auf die Batteriemodule (6) ausgerichtet, die Wechseleinrichtung (5) zieht diese einzeln oder zu mehreren gleichzeitig heraus auf die Aufnahmevorrichtung, die Aufnahmevorrichtung entfernt sich vom Fahrzeug (2) und fährt mit der Transporteinrichtung in das Regallager (41), sie lädt die Batteriemodule (6) in freie Ladeplätze, entnimmt geladene Batteriemodule (6) in der notwendigen Anzahl und fährt mit diesem Batteriesatz wieder zurück zum Fahrzeug (2), wo sie von der Wechseleinrichtung (5) in die Aufnahmeräume des Fahrzeugs einzeln oder zu mehreren gleichzeitig geschoben werden, die Batteriemodule (6) werden im Fahrzeug (2) kontaktiert und verriegelt, die Wechseleinrichtung (5) entfernt sich vom Fahrzeug (2), die Klappe (30, 79) schließt sich, das Fahrzeug (2) fährt an.

In der Beschreibung und in den folgenden Ansprüchen wird mehrmals Bezug auf ein kartesisches Koordinatensystem genommen, das folgendermaßen definiert ist. Die x-Achse ist die Längsachse des Fahrzeugs (2) oder die Verfahrachse der Transporteinrichtung entlang des Regallagers (41). Die Y-Achse ist die Hochachse des Fahrzeugs (2) oder die Verfahrachse der Hubeinrichtung innerhalb der Transporteinrichtung. Die Z-Achse ist die Querachse des Fahrzeugs (2) oder die Verfahrachse der Aufnahmevorrichtung. Zwischen den jeweiligen Achsen von Fahrzeug (2) und Batteriewechselstation (1) können Fluchtungsfehler auftreten, die durch die Form der Module oder durch die Winkelanpassung der Aufnahmevorrichtung ausgeglichen werden.

Weitere Verbesserungen hinsichtlich der Betriebssicherheit von Fahrzeugen und von Batteriewechselstationen (1), und bezüglich der Gewichts-, Teile- und Kostenreduktion, der Standardisierbarkeit und der allgemeinen Anwendbarkeit sind durch die unten beschriebenen zusätzlichen erfindungsgemäßen Ausführungsformen erzielbar, die einzeln oder in Kombination miteinander angewendet werden können.

Für die Batteriemodulen werden folgende Verbesserungen vorgeschlagen:
Die Länge der Batteriemodule (6) entspricht wenigstens dem Doppelten ihrer Breite und wenigstens dem Vierfachen ihrer Höhe, wobei die Länge mehr als der Hälfte der Breite der zu versorgenden Fahrzeuge, aber weniger als der Hälfte der Innenbreite eines Standardcontainers entspricht. Damit ist ein guter Kompromiss zwischen dem verfügbaren Batterievolumen und dem Handling in der Batteriewechselstation (1) erreicht.

Die Hauptmaße der Batteriemodule (6) weichen um jeweils nicht mehr als 20 % nach oben oder unten von den Maßen 1,0 x 0,35 x 0,15 m ab. Dieser Maßbereich erlaubt sowohl eine sichere Unterbringung im Fahrzeug (2) mit genügend langen Verformungswegen bei einem Seitencrash als auch eine flache Unterbringung im Fahrzeugboden oder unter den Sitzen und bis zu vier Module bei normalen Radständen.

Die an den batterieseitigen Kontakten (10) anliegende Spannung der einzelnen Batteriemodule (6) überschreitet die Kleinspannungsgrenze von 120 V Gleichstrom nicht, so dass keine besonderen Schutzmaßnahmen für die Stromkontakte ergriffen werden müssen. Höhere Betriebsspannungen des Fahrantriebs werden erst im Fahrzeug (2) erzeugt, sofern notwendig. Vorzugsweise bieten die Batteriemodule (6) durch eine innere Aufteilung in zwei Zellgruppen und eine Verdopplung der Kontakte zum Fahrzeug (2) pro Modul zwei Spannungsniveaus im Verhältnis 2:1, je nachdem ob die Kontakte im Fahrzeug (2) in Reihe oder parallel verbunden werden. Dies steigert die Anzahl der möglichen Betriebsspannungen im Fahrzeug (2) und senkt zugleich die Gefahr eines Stromschlages bei Berührung der Stromkontakte.

Die Batteriemodule (6) verfügen über parallel zu deren Längsachse verlaufende, durchgängige Kontaktnuten (11) für die batterieseitigen Kontakte (10) und können sowohl zur rechten als auch zur linken Fahrzeugseite hin ausgewechselt werden, wobei die batterieseitigen Kontakte (10) vorzugsweise in der Mitte der Batteriemodule (6) angeordnet sind. Damit sind kurze Kabelstrecken zum Mitteltunnel (32) des Fahrzeugs (2) gegeben und es ist ein weltweiter Einsatz der Batteriemodule (6) möglich, unabhängig von Rechts- oder Linksverkehr.

An den Stirnseiten der Batteriemodule (6) befindet sich eine Kupplungsvorrichtung, an die die Wechseleinrichtung (5) kuppeln und Zug- und Druckkräfte aufbringen kann, wobei die Kupplung vorzugsweise elektromagnetisch erfolgt. Damit kann eine sehr kompakte und nahezu verschleißfreie Kupplung erreicht werden. Zugleich ist eine Kraftbegrenzung als Überlastschutz durch die Strombegrenzung des Elektromagneten leicht zu realisieren und ein äußerst schneller Kupplungsvorgang erzielbar. Die quaderförmige Grundform der Batteriemodule (6) verjüngt sich zu den Endflächen hin um mindestens 10 % bezogen auf die Querschnittsfläche in der Mitte des Batteriemoduls, wobei sich die Verjüngung auf jeder Seite um mindestens 1/20 der Modullänge erstreckt. Damit können kleinere Höhenunterschiede und Ausrichtungsfehler allein durch die geometrische Form der Batteriemodule (6) ausgeglichen werden.

Das Modulgehäuse ist aus zwei sich verjüngenden Endstücken (14) und aus einem Mittelstück (15) mit im Wesentlichen konstantem Querschnitt zusammengesetzt, wobei die Endstücke (14) vorzugsweise aus schlägzähem Kunststoff und das Mittelstück (15) aus Metall bestehen. Dabei ist vorzugsweise in die Stirnseiten der Endstücke (14) eine Kupplungsmulde (13) für die Kupplungsnase (64) der Wechseleinrichtung (5) eingeformt, die aus einem magnetisierbaren Werkstoff besteht oder mit einem solchen hinterlegt ist. Das Mittelstück (15) kann zur Verbesserung der Wärmeableitung durch Konvektion gerippt oder gewellt sein. Mit dieser Bauweise ist die Voraussetzung für den Einsatz von am laufenden Meter erzeugten Blech- oder Strangpressprofilen für das Mittelteil (15) gegeben.

In das Modulgehäuse sind Rollen (16) integriert, auf denen das Batteriemodul (6) fahren kann, wobei die Rollen (16) vorzugsweise in den Endstücken des Modulgehäuses lagern. Alternativ befinden sich in den Fahrzeugen (2) oder im Regallager (41) Tragrollen (19) auf denen die Batteriemodule (6) zumindest streckenweise rollen können. Hierbei ist es vorteilhaft, die Tragrollen (19) in den längsseitigen Nuten des Batteriemoduls (6) abrollen zu lassen. Auf diese Weise werden die Reibungskräfte und die mechanischen Belastungen an der Wechseleinrichtung (5) erheblich reduziert und eine niedrige Gesamthöhe erzielt.

Die Batteriemodule können mit der Fahrzeugstruktur durch Verriegelungselemente (18) formschlüssig verriegelt und zum Wechseln entriegelt werden. Es ist vorteilhaft, die Verriegelung beim Einschieben zumindest bei einem Verriegelungselement (18) pro Modul durch einen Schnappmechanismus selbsttätig zu gestalten. Es wird vorgeschlagen, die Körper der Verriegelungselemente (18) zugleich als Zuführkänal für das Fluid in das Batteriemodul (6) auszubilden, um die Zahl der notwendigen Teile zu senken.

Der Energieinhalt der einzelnen Batteriemodule (6) beträgt in der Regel 5 kWh oder mehr, womit sich bei bis zu vier Batteriemodulen (6) Energieinhalte der Gesamtbatterie in den Stufen 5, 10, 15 und 20 kWh ergeben, was für Stadtfahrzeuge schon ausreichend ist. Mit steigendem Fortschritt bei der Zellchemie können künftig auch Energieinhalten von weit über 10 kWh pro Modul erreicht werden. In die Batteriemodule (6) ist ein elektronisches Batteriemanagementsystem integriert, das den Zustand der Batteriezellen überwacht und sie vor thermischen oder elektrischen Überlastungen schützt, wobei es Daten erfassen, abspeichern und an das Fahrzeug (2) und an die Steuerzentrale (46) der Batteriewechselstation (1) senden kann. Damit ist das Wissen über den Betriebs- und Leistungszustand des jeweiligen Batteriemoduls (6) mit diesem verbunden und unabhängig vom jeweiligen Fahrzeug (2) oder einer bestimmten Batteriewechselstation (1) auslesbar. Die batterieseitigen Kontakte (10) für den Leistungsstrom sind zugleich auch die elektrischen Kontakte zur Datenübermittlung. Alternativ oder zusätzlich ist eine berührungslose elektromagnetische oder optische Sende- und Empfangsanlage zum Datenaustausch mit Fahrzeug (2) und Batteriewechselstation (1) in die Batteriemodule (6) integriert. Beide Methoden vermeiden empfindliche Steckkontakte für die Datenübermittlung. Vorzugsweise sind auch Anschlüsse für Fluide zur Kühlung oder Temperierung des Batteriemoduls (6) vorhanden, so dass dieses stärker belastet werden kann.

Fahrzeugseitig werden folgende weitere Verbesserungen vorgeschlagen:
Die Anordnung der Aufnahmeräume in Längsrichtung des Fahrzeugs (2) folgt im Grundsatz einem regelmäßigen Raster, wobei die Rasterplätze beliebig besetzt sein können. Die Anordnung der Ladeplätze im Regallager (41) entspricht vorzugsweise dem Raster der Aufnahmeräume im Fahrzeug (2) und das Rastermaß weicht vorzugsweise um nicht mehr als 20% nach oben oder unten von 0,4 m ab. Die Anordnung in einem Raster reduziert die Verfahrwege und erleichtert die Standardisierung und Automatisierung des Batteriewechsels. Das vorgeschlagene Rastermaß erlaubt bis zu vier Batteriemodule (6) zwischen den Radhäusern und gleichzeitig eine ausreichende Länge eventueller Mulden für die Fußräume. Bei Fahrzeugen mit sehr langem Radstand können auch noch mehr Batteriemodule (6) eingesetzt werden. Abweichungen vom Rastermaß sind möglich und können durch die Wechseleinrichtung ausgeglichen werden, wenn jeweils nur ein Modul bewegt wird.

In den Aufnahmeräumen sind Steckkontakte für die Leistungsanschlüsse der Batteriemodule (6) vorhanden, die beim Einschieben der Batteriemodule (6) selbsttätig den elektrischen Kontakt herstellen, wobei sie vorzugsweise an den Vertikalstegen (21) angebracht sind und an den Längsseiten der Batteriemodule (6) in durchgehenden Kontaktnuten (11) kontaktieren. Auf diese Weise sind sowohl ein Rechts- als auch ein Linksaustausch möglich, was den Einsatz der Fahrzeuge in allen Ländern erlaubt. Die Aufnahmeräume sind durch eine oder mehrere Klappen (30, 79) dicht verschlossen, die zum Wechseln geöffnet werden können, wobei sich die Klappen (30, 79) vorzugsweise um eine oder mehrere Achsen parallel zur Fahrzeuglängsachse öffnen. Die Öffnung der Klappen (30, 79) erfolgt servomotorisch betrieben auf Knopfdruck des Fahrers und das Schließen der Klappen (30, 79) kann erst auf ein Freigabesignal der Batteriewechselstation (1) hin erfolgen. Die Klappen (30, 79) schützen die Batterien vor Schmutz, Wasser und Witterungseinflüssen. Sie öffnen vorzugsweise nach oben und blockieren die zur Batteriewechselstation (1) weisenden Fahrzeugtüren, so dass die Passagiere nicht versehentlich mit dem Roboterarm kollidieren können, und sie sind vorzugsweise so dicht, dass Watfahrten bei Straßenüberflutungen bis zur Radachse gemacht werden können, ohne dass die Aufnahmeräume voll Wasser laufen.

In den Aufnahmeräumen sind ein oder mehrere formschlüssige Verriegelungselemente (18) vorhanden, die in entsprechende Verriegelungstaschen (7) der Batteriemodule (6) eingreifen. Über Öffnungen in den Wandungen der Aufnahmeräume kann Luft zur Temperierung oder Kühlung der Batteriemodule (6) ein- und ausgeleitet werden. Es können auch normierte Fluidanschlüsse für die Batteriemodule (6) vorhanden sein, die vorzugsweise zugleich die Verriegelungselemente (18) sind. Auf diese Weise kann ein Wärmestau innerhalb der Aufnahmeräume und innerhalb der Batteriemodule (6) verhindert werden. Die Klappe oder die Klappen (30, 79) werden vorzugsweise durch den gleichen Servomotor oder Aktuator zusammen mit den Verriegelungselementen (18) mittels Koppelstangen geöffnet bzw. geschlossen, wobei das Fahrzeug (2) nicht anfahren kann, solange ein Positionsgeber oder ein Schließkontakt anzeigt, dass die Klappe offen ist. Diese Funktionsintegration stellt sicher, dass die Batteriemodule (6) entriegelt sind, wenn die Wechseleinrichtung (5) in Aktion gesetzt wird und dass die Batteriemodule (6) sicher verriegelt sind, bevor das Fahrzeug (2) anfährt.

Die Klappe oder die Klappen (30, 79) sind seitlich im Schwellerbereich angeordnet und öffnen nach oben. Alternativ stellen sie einen Teil des Fahrzeugbodens dar und öffnen nach unten, wobei sie dann den Boden der Aufnahmeräume bilden und das oder die Batteriemodule (6) tragen und zum Wechsel herabsenken. Die erste Methode ist die Standardmethode und technisch einfach. Sie schützt die Passagiere vor einem versehentlichen Kontakt mit der Wechseleinrichtung (5). Die zweite Methode erlaubt die Einbindung von Fahrzeugen (2) ins System, deren Karosseriestruktur die Öffnung des Schwellerbereichs nicht erlaubt. Diese Fahrzeuge müssen dann entweder über eine relativ große Bodenfreiheit verfügen oder durch eine spezielle Ausbildung der Leitschiene (4) etwas über Fahrbahnniveau angehoben werden, so dass die Batteriemodule (6) auf die Aufnahmevorrichtung der Wechseleinrichtung (5) gezogen werden können. Der Leitschiene (4) ist dazu vorzugsweise eine geringfügig erhöhte Stellfläche (82) vorgelagert, die zwei flache Rampen zur Auf- und Abfahrt besitzt. Die Höhe der Stellfläche (82) ist so bemessen, dass die Oberfläche des Übergabetischs (39) auf das Niveau der Unterseite der Batteriemodule (6) gesenkt werden kann, auch bei Fahrzeugen (2), die die Batteriemodule (6) über Bodenklappen (79) austauschen, Die Leitschiene (4) besitzt im Bereich der Ausgabeöffnung ein schwenkbares Mittelstück (83), das heruntergeklappt wird, wenn solch tief positionierte Batteriemodule (6) gewechselt werden. Alternativ ist die Batteriewechselstation (1) um die erforderliche Höhe in die Fahrbahn eingelassen oder die Stellfläche (82) besitzt eine einige Zentimeter tiefe Mulde oder absenkbare Fläche unter der Bodenplatte (29) des Fahrzeugs (2). Auf diese Weise können mit der gleichen Technik auch Fahrzeuge (2) in das System integriert werden, bei denen der Austausch der Batteriemodule (6) nicht durch Seitenklappen (30) im Seitenschweller des Fahrzeugs möglich ist.

Die fahrzeugseitigen Kontakte (20) für den Leistungsstrom der einzelnen Batteriemodule (6) im Fahrzeug (2) sind durch Stromleitungen in Reihen- oder in Parallelschaltung oder in einer symmetrischen Mischung aus beiden verbunden. Ein mit diesen Leitungen verbundenes Modulmanagementsystem (27) überwacht die einzelnen Batteriemodule (6) und deren Zusammenspiel, wobei es die einzelnen Batteriemodule (6) nach ihrer jeweiligen Leistungsfähigkeit belastet und wofür es die in den Modulen gespeicherten Daten benutzt oder einen Belastungstest der Module durchführt. So kann das Zusammenspiel und die Ausnutzung der einzelnen Batteriemodule (6), die im Laufe der Zeit alle eine unterschiedliche Historie haben, optimiert werden.

Bezüglich der Ausrichtung des Fahrzeuges (2) in eine günstige Position relativ zur Batteriewechselstation (1) werden folgende Maßnahmen vorgeschlagen: Das Fahrzeug (2) wird durch eine vor der Batteriewechselstation (1) auf dem Boden angebrachte Leitschiene (4) in eine in der Z-Achse günstige Position geführt. Dabei führt die Leitschiene (4) die äußere Reifenflanke durch eine schräg nach oben weisende Bordkante. Sie besitzt zudem eine zur Bordkante geneigte Fahrfläche (22), die ein zur Bordkante weisendes Lenkmoment an den Vorderrädern erzeugt. Die geneigte Fahrfläche ist deutlich breiter als die gebräuchlichen Reifenbreiten und vorzugsweise um Winkel zwischen 8° und 12° zur Horizontalen geneigt. Die Oberfläche der Bordkante (4) ist glatt, um möglichst wenig Reifenverschleiß zu erzeugen, die der Fahrfläche (22) hingegen ist griffig. Vorzugsweise wird die günstige X-Position des Fahrzeugs (2) durch eine Radmulde in der Fahrfläche (22) der Leitschiene (4) oder durch einen oder zwei Querstege als Radanschlag (23) auf der Fahrfläche (22) der Leitschiene (4) markiert. Die Tiefe der Radmulde oder die Höhe der Querstege sind so groß bemessen, dass ein für den Fahrer deutlich wahrnehmbarer Widerstand am Reifen erzeugt wird. Mit der Nutzung des Eigenlenkverhaltens der Fahrzeugräder kann auf aktive und stark belastete Elemente zur Ausrichtung des Fahrzeugs(2), wie sie das in WO002010033883A1 beschriebene System vorsieht, verzichtet werden.

Bezüglich der Wechsel- und Transporteinrichtungen der Batteriemodule (6) werden folgende Verbesserungen vorgeschlagen:
Der seitliche Wechsel eines oder mehrerer Batteriemodule (6) gleichzeitig wird durch einen servomotorisch betriebenen Knickarmroboter (38) durchgeführt, der einen oder mehrere mehrteilige Arme besitzt, der aufgeteilt ist oder die je aufgeteilt sind in Oberarm (61), Unterarm (62) und Roboterhand (63). Das Schultergelenk und das Ellenbogengelenk besitzen vorzugsweise eine annähernd horizontale Achse. Das Handgelenk besitzt drei Rotationsfreiheitsgrade, um sich an die Raumlage des Batteriemoduls (6) anpassen zu können. Dabei wird das Handgelenk in der Drehung um die X-Achse von einem Handservo (66), der am Unterarm (62) befestigt ist, und einer Feder eingestellt und in den beiden anderen Achsen von Federn, die vorzugsweise ca. 5 Winkelgrade in jeder Richtung an Bewegung zulassen. Eine Kinematik des Roboters mit gelenkig verbundenen Auslegern hat große Vorteile hinsichtlich Dynamik, Betriebssicherheit und Kompaktheit. Die Einstellung der Roboterhand (63) durch einen Handservo (66) und durch Federn erlaubt eine Anpassung der Roboterhand (63) an die Raumlage des Batteriemoduls (6), an das sie kuppelt. Der Knickarmroboter (38) besitzt zusätzlich eine Linearführung (59), die den Schulterschlitten (60) trägt und deren Bewegungsächse parallel zur X-Achse der Batteriewechselstation (1) ausgerichtet ist, wobei der Verfahrweg vorzugsweise wenigstens ein Rastermaß beträgt. Damit sind Anpassungen selbst an größere Ausrichtungsfehler zwischen Fahrzeug (2) und Batteriewechselstation (1) in Richtung der X-Achse und ein schneller und sicherer Batteriewechsel möglich. Die Ober- (61) und Unterarme (62) des Knickarmroboters (38) sind in der Ruheposition und wenn die Transporteinheit im Bereich der Wechseleinrichtung (5) verfährt, platzsparend vertikal nebeneinander geschwenkt. Dazu sind Ober- (61) und Unterarm (62) entsprechend seitlich versetzt angeordnet. Dadurch kann der Roboter innerhalb des Containers gut geschützt untergebracht werden ohne den Batterietransport zu behindern.

Die Roboterhand (63) trägt eine Kupplungsvorrichtung, die form- oder kraftschlüssig an die Stirnfläche der Batteriemodule (6) kuppelt. Es wird vorgeschlagen, dass kraftschlüssig gekuppelt wird und dass der Kraftschluss durch einen Elektromagneten erzeugt wird, der in der Roboterhand (63) sitzt, und dass die Kupplungsvorrichtung eine konvexe Kupplungsnase (64) besitzt, die in eine entsprechend konkave Kupplungsmulde (13) am Batteriemodul (6) passt, die in keiner Raumachse rotationssymmetrisch ist. Auf diese Weise ist ein verschleißarmer und äußerst schneller Kupplungsvorgang möglich und zugleich die Detektion der Raumlage des Batteriemoduls (6) durch die Lagesensoren (72) im Handgelenk des Roboters. Zudem ist so eine einfache Überlastsicherung durch die Begrenzung der Haltekraft des Elektromagneten möglich.

Am Unterarm (62) oder an der Roboterhand (63) sind Sensoren oder Kameras befestigt sind, die erkennen können, ob die Klappe (30, 79) des Fahrzeugs (2) offen ist und wo sich ein Batteriemodul (6) befindet. Die Steuerungseinheit des Roboters benützt die Signale der Sensoren oder Kameras, um die Roboterhand (63) auf die Stirnflächen der Batteriemodule (6) zu führen ohne mit den übrigen Fahrzeugteilen zu kollidieren. Die fahrzeugnahe Anordnung der Sensoren erleichtert eine präzise Führung der automatisierten Roboterhand (63).

Die Raumlage der Roboterhand (63) oder die des Batteriemoduls (6) nach dem Kuppeln relativ zu den Hauptachsen des Roboters wird durch Sensoren erfasst. Die Steuerungseinheit erkennt aus deren Daten die Lage der Batteriemodule (6), worauf sie den Übergabetisch (39) in zumindest annähernd die gleiche Raumlage und bis zur Höhe der Unterseiten der Batteriemodule (6) steuert, so dass sie dann in etwa in der gleichen Ebene liegen wie die Transportfläche des Übergabetischs (39) bevor das Batteriemodul (6) auf den Übergabetisch gezogen wird. Auf diese Weise wird ein ruckfreier und verschleißarmer, aber trotzdem schneller Wechselvorgang möglich. Die Steuerungseinheit des Roboters führt die Roboterhand (63) beim Herausziehen und beim Hineinschieben der Batteriemodule (6) annähernd parallel zur Querachse des Fahrzeugs (2) oder zur Längsachse der Batteriemodule (6), wobei die Linearführung des Roboters den Ausgleich in Längsrichtung des Fahrzeugs (2) übernimmt. So wird ein Verkanten des Batteriemoduls (6) im Aufnahmeraum des Fahrzeugs (2) ausgeschlossen.

Die Steuerungseinheit des Roboters benutzt zusätzlich Daten von Distanzsensoren (24), die die Veränderung der Bodenfreiheit des Fahrzeugs (2) beim Entladen der Batteriemodule (6) messen, um die Höhe des Übergabetischs (39) sowohl bei der Entnahme als auch beim Einschieben der Module stets auf der entsprechenden Ebene des Fahrzeugs zu halten, wobei die Distanzsensoren (24) vorzugsweise in der Fahrfläche (22) der Leitschiene (4) im Bereich der Ausgabeöffnung angebracht sind. Auf diese Weise werden Höhenunterschiede auf Grund der Aus- und Einfederung beim Wechselvorgang ausgeglichen unabhängig davon, ob die Batteriemodule einzeln oder zu mehreren gleichzeitig entnommen oder eingeschoben werden. Die Steuerungseinheit des Roboters speichert die beim Kuppeln und Herausziehen der Batteriemodule (6) gemessenen Positions- und Winkeldaten ab und benutzt sie beim Hineinschieben der Batteriemodule, um durch die entsprechende Ansteuerung der Servomotoren oder Aktuatoren des Übergabetischs (39) und des Hubrahmens (40) zur Positionierung des Übergabetischs (39) die Fluchtungsfehler zu minimieren und das Batteriemodul (6) im letzten Stück des Verfahrweges ins Fahrzeug langsam in die richtige Position zur Verriegelung zu führen. Dadurch wird der Komfort des Beladevorgangs erhöht und die mögliche Verfahrgeschwindigkeit der Batteriemodule (6) gesteigert ohne die korrekte Verriegelung zu gefährden.

Der Quertransport der Batteriemodule (6) auf dem Übergabetisch (39) erfolgt synchron mit der Roboterhand (63), solange diese am Batteriemodul (6) kuppelt, ansonsten unabhängig durch je zwei angetriebene, gezahnte Transportriemen (49) pro Modul, auf deren Rücken die Batteriemodule (6) liegen, wobei die Transportriemen (49) vorzugsweise auch am Rücken gezahnt sind und so in die Querrippen (17) an der Unterseite der Batteriemodule (6) formschlüssig eingreifen können. Damit wird ein sicherer Transport der Batteriemodule (6) auf dem Übergabetisch erreicht. Das Entnehmen der Batteriemodulen (6) aus dem Regallager (41) erfolgt dadurch, dass der Übergabetisch (39) unter das aus dem Regallager (41) überstehende Ende des Batteriemoduls (6) fährt, es um ein kleines Stück anhebt und dann mit den Rücken der Transportriemen (49) aus dem Regallager (41) zieht, wobei vorzugsweise zwischen dem gezahnten Rücken des Transportriemens und wenigstens einer Querrippe (17) an der Unterseite des Batteriemoduls (6) Formschluss entsteht. Dadurch wird ein sicherer Entnahmevorgang erreicht ohne weiter Aktuatoren zu benötigen.

Die Servomotoren für den Schulterschlitten (60), für den Oberarm (61) und auch für den Unterarm (62) sind am Schulterschlitten (60) montiert. Die Bewegung vom Unterarmservo (68) zum Unterarm (62) wird mittels eines formschlüssigen Umschlingungsgetriebes innerhalb des Oberarms (61) übertragen, vorzugsweise mit einer Zahnkette (73). Auf diese Weise erhält man eine sehr kompakte Antriebseinheit und ein geringes Armgewicht.

Die Transporteinheit besteht aus einem Hubrahmen (40), der auf Schienen entlang des Regallagers (41) fährt, und aus einem Übergabetisch (39), der am Hubrahmen (40) vertikal verfährt und der in drei Drehachsen auf die Raumlage des Fahrzeugs (2) und auf die Raumlage des Regallagers (41) durch Servomotoren eingestellt wird. Der Übergabetisch (39) kann an zwei Querschienen (50) in beide Richtungen verfahren. Auf diese Weise kann der Übergabetisch (39) in allen sechs Achsen auf die Ausrichtung des Fahrzeugs (2) oder der Batteriewechselstation (1) eingestellt werden. Die beiden Querschienen (10) sind mittels je eines Gelenkes, das drei Freiheitsgrade der Rotation besitzt, in je einem Führungsblock (57) gelagert, der mittels einer Linearführung am Hubrahmen (40) vertikal beweglich ist, wobei eines der Gelenke auch einen linearen Freiheitsgrad besitzt, und dass diese beiden Gelenke eine Drehung des Übergabetisch (39) in allen drei Raumachsen um einige Winkelgrade erlauben. Vorteil dieser Anordnung ist, dass keine weiteren Zwischenrahmen für diese doppelt kardanische Aufhängung erforderlich sind und dass der Übergabetisch (39) sehr flach bauen kann. Die Raumlage des Übergabetischs (39) in der Z-Achse wird durch das Zusammenspiel der beiden Hubservos (53), in der X-Achse durch die beiden Neigungsservos (52) der Querschienen (50) und in der Y-Achse durch die beiden Querantriebe (51) des Übergabetischs (39) eingestellt. Hierdurch wird die Anzahl der notwendigen Antriebe minimiert.

Für die Ausbildung und den Betrieb des Regallagers (41) für die Batteriemodule (6) werden folgende Vorschläge gemacht:
Die Orientierung der Batteriemodule (6) im Regallager (41) entspricht annähernd der Orientierung im Fahrzeug (2) und das Raster der Ladeplätze des Regallagers (41) entspricht vorzugsweise dem Raster der Aufnahmeräume in den Fahrzeugen (2). Auf diese Weise werden Verfahrwege, Verfahrzeiten und Bauräume eingespart.

Die in den Ladeplätzen befindlichen Batteriemodule (6) sind über bidirektionale AC-DC-Wandler mit dem Stromnetz verbunden. Damit können die Batteriemodule sowohl Energie aus dem Netz aufnehmen, als auch Energie ins Netz abgeben, wobei vorzugsweise ins Mittelspannungsnetz eingespeist wird. Damit kann die Speicherkapazität der eingelagerten Fahrzeugbatterien zur bidirektionalen Netzpufferung kostengünstig verwendet werden. Dabei können bei einer Nutzung von lediglich 40% der eingelagerten Batteriemodule (6) Rückspeiseleistungen von einem halben Megawatt pro Container und Rückspeiseenergien von rund 200 kWh erreicht werden.

Die Batteriemodule (6) werden nach ihrer momentanen Leistungsfähigkeit in zwei oder mehrere Leistungsklassen eingeteilt und von der Batteriewechselstation (1) aufgegeben, z.B. analog zu Super- und Normalbenzin, wobei die Grenzen der Leistungsklassen vorzugsweise fließend sind und von der Steuerzentrale (46) nachfrageabhängig festgelegt werden. Dieses Verfahren erlaubt das einfache Einschleusen leistungsfähigerer Batterietechnik ins System zu adäquaten Preisen und eine variable Anpassung an die tatsächliche Nachfrage.

Die Ausgabe der Batteriemodule (6) erfolgt nach optimalem Ladungszustand, unabhängig davon, in welcher zeitlichen Reihenfolge die Batteriemodule (6) ins Regallager (41) gelangt sind. Es findet also kein schematischer First-In-First-Out-Wechsel wie bei Umlaufsystemen statt. Beim Austausch mehrerer Batteriemodule (6) wird ein Batteriesatz aus bezüglich ihrer aktuellen Leistungsfähigkeit und Belastbarkeit optimal zueinander passenden Batteriemodulen (6) automatisch durch die Steuerzentrale (46) zusammengestellt. Damit erreicht man eine maximal nutzbare Batteriekapazität im Fahrzeug (2).

Es findet ein Eingangscheck der Batteriemodule (6) auf alle wichtigen Kenngrößen, insbesondere auch auf die Temperatur statt. Zu heiße Batteriemodule (6) werden zunächst in spezielle Kühlplätze transportiert, wo sie solange gekühlt werden, bis ihre Temperatur unterkritisch ist. Diese Kühlplätze werden vorzugsweise auch für Batteriemodule (6) verwendet, die im Regallager (41) durch Lade- oder Entladevorgänge zu heiß geworden sind. Damit ist sichergestellt, dass eine hohe Kühlleistung bei kritischen Batteriemodulen (6) zur Verfügung gestellt werden kann, ohne die Kühlanlage zu groß machen zu müssen. Gleichzeitig können eventuell notwendige Löschprozesse lokal konzentriert werden.

Im Regallager (41) in der Nähe der Ausgabeöffnung befindet sich ein Pufferbereich, in dem stets ein optimal zusammengestellter Batteriesatz vorhanden ist, der ohne lange Verfahrwege der Transporteinrichtung ins Fahrzeug (2) übergeben werden kann. Vorzugsweise sind auch vier freie Plätze für die aus dem Fahrzeug (2) entnommenen Batteriemodule (6) in der Nähe der Ausgabeöffnung vorhanden. Hierdurch kann die Wechselzeit pro Fahrzeug (2) verkürzt werden, zumindest solange die Fahrzeugfrequenz nicht zu hoch ist. Das Einlagern und Entnehmen mehrerer Batteriemodule (6) in das Regallager (41) findet in einem zeitoptimierten Mix zwischen beiden Prozessen statt, der von der Steuerzentrale (46) unter Berücksichtigung, der Positionen der zu bewegenden Batteriemodule (6) und den jeweiligen Verfahrgeschwindigkeiten der Transporteinrichtung in den drei linearen Raumachsen berechnet wird.

Das Regallager (41) ist zusammen mit der Wechsel- und Transporteinrichtung, mit den Steuerungs-, Klimatisierungs- und Löscheinrichtungen sowie mit der Lade- und Leistungselektronik in einem Container mit Normmaßen untergebracht, vorzugsweise in einem 20'-Container. Hierdurch reduzieren sich der Herstellungs- und Logistikaufwand erheblich, und es ist eine kostengünstige Serienproduktion möglich.

Die Entnahme der Batteriemodule (6) aus dem Fahrzeug (2) ist durch einen Zugangscode gesichert, der aus einem mit dem Fahrzeug (2) verbundenen elektronischen Schlüssel und einem mit der Batteriewechselstation (1) verbundenen elektronischen Schlüssel erzeugt wird, wobei die Entnahme erst dann möglich ist, wenn beide Schlüssel zueinander passen und wenn sowohl der Bordcomputer des Fahrzeugs (2) als auch die Steuerzentrale (46) der Batteriewechselstation (1) die Freigabe erteilt haben. Vorzugsweise besitzen die Batteriemodule (6) ihrerseits einen individuellen nicht überschreibbaren elektronischen Schlüssel, der ebenfalls zu den anderen beiden Schlüsseln passen muss, wobei der Datenabgleich vorteilhaft über eine verschlüsselte Funkstrecke erfolgt.

Zum Einsatz bei beengten oberirdischen Verhältnissen und zur Steigerung des Fahrzeugdurchsatzes der Batteriewechselstation (1) werden folgende Ausführungen vorgeschlagen:
Das Wechseln der Batteriemodule (6) erfolgt oberirdisch, deren Lagerung aber unterirdisch. Dabei wird vorzugsweise ein Container mit Standardmaßen zur Unterbringung der unterirdischen Aggregate und des Regallagers (41) verwendet. Hierdurch kann der oberirdische Platzbedarf deutlich reduziert werden. Die Aufstellung mehrerer Wechseleinrichtungen (5) ist erleichtert. Zum vertikalen Transport der Batteriemodule (6) von der Wechseleinrichtung (5) zum Regallager (41) wird je ein Teleskophubrahmen (75) pro Wechseleinrichtung (5) eingesetzt, der seinerseits auf Schienen (78) parallel zur X-Achse verfahren kann. Damit ist es möglich, das unterirdische Regallager (41) wesentlich größer als die oberirdischen Anlagen zu bauen. Es ist vorteilhaft, mehrere Wechseleinrichtungen (5) mit einem unterirdischen Regallager (41) zu verbinden, das vorzugsweise in einem 40'-Container untergebracht ist. So kann, trotz des erhöhten Aufwandes im Tiefbau, auf eine vormontierte und standardisierte Einheit mit großer Kapazität zurückgegriffen werden.

Das erfindungsgemäße System zur Energieversorgung von Elektrofahrzeugen weist gegenüber dem Stand der Technik zahlreiche Vorteile auf, die oben bereits bei den einzelnen Merkmalen erwähnt sind. Insbesondere sind. Vorschläge hinsichtlich Anordnung, Größe, Geometrie und Kontaktierung von Batteriemodulen (6) gemacht worden, die für viele Fahrzeugklassen verwendet werden können und die sich daher als Standard für künftige Batteriewechselsysteme empfehlen. Ebenso sind Vorschläge zum Austauschverfahren und zur Einlagerung der Batteriemodule (6) in ein Regallager (41) gemacht, die einen hohen Nutzungsgrad bei gleichzeitig niedrigem apparativen Aufwand erzielen. Zusätzlich erlaubt die Standardisierung der Batteriemodule (6) in ihren geometrischen Abmessungen und der Art der Kontaktierung und des Datentransfers eine ökonomische Zweitnutzung der Batterien nach dem Gebrauch im Fahrzeug (2) als reine Pufferbatterien. Auch wird das Recycling der Batteriemodule (6) hinsichtlich Logistik und automatisierten Verfahren erheblich erleichtert. Ferner strahlt die Erfindung in den Fahrzeugbau aus, weil es nun möglich ist, standardisierte Plattformen mit einem hohen Sicherheitspotential und mit einer großen Designfreiheit für Elektrofahrzeuge zu verwenden.

Weitere erfindungsgemäße Merkmale gehen aus der Beschreibung der Ausführungsbeispiele und aus den Zeichnungen hervor. Sie sind im Folgenden unter Bezug auf die Zeichnungen beschrieben. Um die Unabhängigkeit der Erfindung von der äußeren Gestalt der Fahrzeuge zu verdeutlichen, ist in den Zeichnungen stets nur ein Fahrzeugchassis stellvertretend für das Fahrzeug (2) gezeigt. Daher wird es auch mit der gleichen Bezugsziffer bezeichnet. Die Zeichnungen zeigen:
- Fig. 1: eine isometrische Ansicht des Gesamtsystems mit Fahrzeugchassis (2), Leitschiene (4) und Batteriewechselstation (1)
- Fig. 2: alle wesentlichen Aggregate der Batteriewechselstation (1)
- Fig. 3: eine Dreiseitenansicht eines Batteriemoduls (6)
- Fig. 4: eine isometrische Ansicht eines Batteriemoduls (6) schräg von unten mit Detailzeichnung
- Fig. 5: ein Batteriemodul (6) neben einem Vertikalsteg (21)
- Fig. 6: ein Verriegelungselement (18) mit Luftkanälen in zwei Ansichten
- Fig. 7: ein Fahrzeugchassis (2) in Wechselposition an der Leitschiene (4)
- Fig. 8: ein Fahrzeugchassis (2) ohne Deckplatte (31) in Draufsicht
- Fig. 9: ein kurzes Fahrzeugchassis (2) mit einer Detailansicht der Batteriekontaktierung
- Fig. 10: ein Fahrzeugchassis (2) für 2 Batteriemodule mit Fußmulden in der Deckplatte
- Fig.11: einen Knickarmroboter (38) mit Linearführung in isometrischer Ansicht
- Fig.12: einen Knickarmroboter (38) in Seitenansicht mit Detailansicht
- Fig. 13: einen Knickarmroboter (38) mit Detail zum Zahnkettenantrieb des Unterarms
- Fig.14: den Zahnkettenantrieb in Seitenansicht mit Detailansicht
- Fig.15: eine Dreiseitenansicht von Unterarm (62) und Roboterhand (63)
- Fig.16: eine isometrische Ansicht eines doppelarmigen Roboters
- Fig. 17: einen Knickarmroboter (38) in Parkstellung in Seitenansicht
- Fig.18: eine Transporteinrichtung mit Übergabetisch (39), Hubaggregat und Schienen
- Fig.19: einen Servomotor zum Riemenantrieb
- Fig.20: einen Blick in die Fahrgasse der Transporteinrichtung
- Fig.21: eine Batteriewechselstation (1) mit unterirdischer Lagerung der Batteriemodule (6) und zwei Wechseleinrichtungen (5)
- Fig.22: eine solche Batteriewechselstation (1) in Frontansicht ohne Containergehäuse und Nebenaggregate
- Fig.23: die entsprechende Draufsicht
- Fig.24: einen Teleskophubrahmen (75) mit Übergabetisch (39) und Schienen (78)
- Fig.25: einen Belegungsplan für das Regallager (41)
- Fig.26: ein Fahrzeugchassis (2) mit Bodenklappen (79) von schräg unten gesehen
- Fig.27: dieses Chassis in Seitenansicht
- Fig.28: dieses Chassis in Heckansicht
- Fig.29: das Hebewerk des Hubmechanismus der Bodenklappen (79)
- Fig.30: eine erhöhte Stellfläche (82) zur Angleichung der Niveaus von Batteriemodulen (6) und Übergabetisch (39) bei Fahrzeugen mit Bodenklappen (79).
- Fig.31: den halb aufgeschnittenen Container der Batteriewechselstation (1)

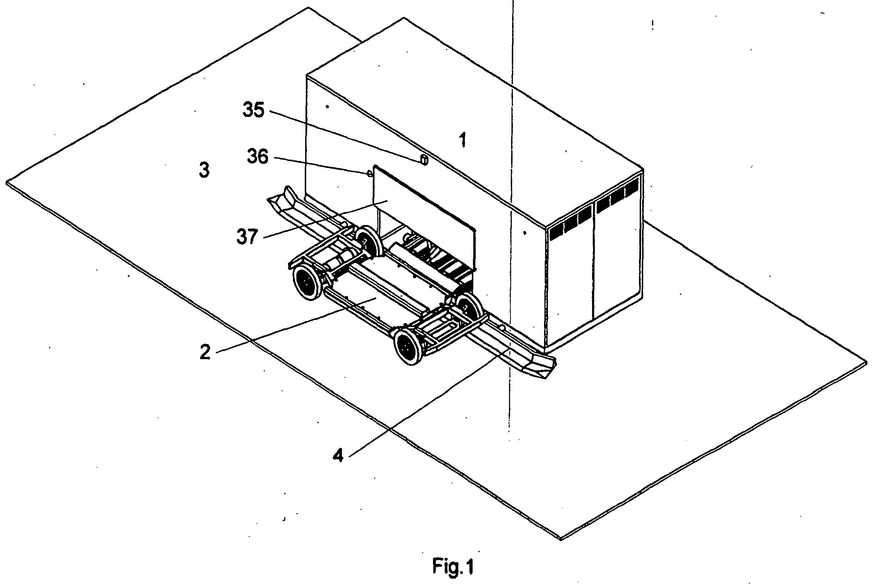

Das in Fig.1 gezeigte Ausführungsbeispiel des Oberbegriffs der Erfindung besteht aus einem ebenerdig auf einer befahrbaren Bodenfläche 3 aufgestellten 20'-Container, der alle zum Wechsel, zum Transport, zur Einlagerung, zur Ladung und Überwachung der Batteriemodule 6 notwendigen Aggregate enthält. Lediglich die Leitschiene 4 mit den darin integrierten Distanzsensoren 24 ist mit einem Abstand von etwa 0,3 m vor der Containerwand angebracht. Beides zusammen stellt die Batteriewechselstation 1 dar. Ein Fahrzeugchassis 2 steht in günstiger Position vor der Ausgabeöffnung, die durch eine vertikal verfahrbare Schiebetür 37 verschlossen werden kann. Eine Überwachungskamera 35 registriert die Bewegungen und Gegenstände im Bereich der Ausgabeöffnung und übermittelt ihre Bilder an die Steuerzentrale 46, die diese auswertet und entsprechende Sicherheitsmaßnahmen einleitet ,wie z.B. das Senden von Warnsignalen oder das Stoppen der Wechseleinrichtung 5. Eine Signallampe 36 zeigt dem Fahrer an, ob das Fahrzeug 2 in einer gültigen Position steht.

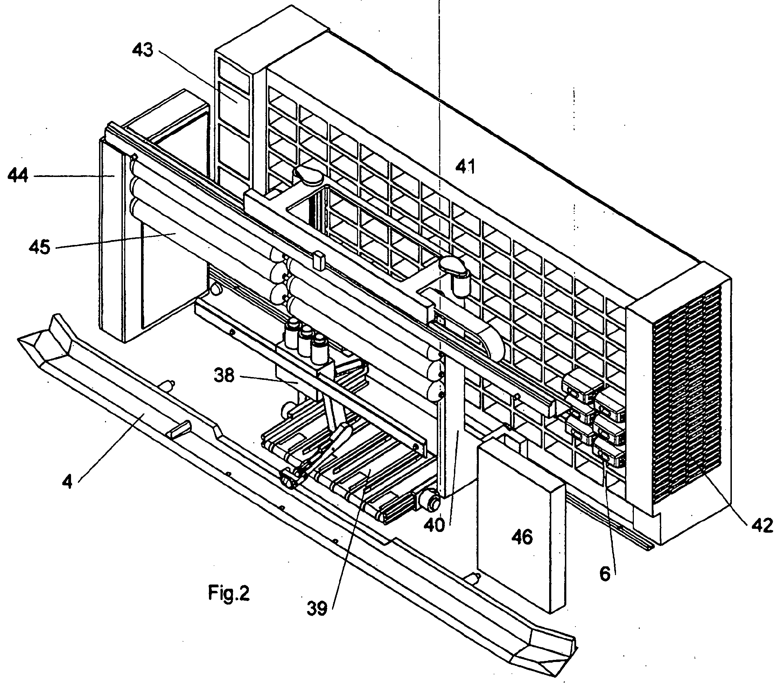

Fig.2 zeigt das Innenleben der Batteriewechselstation 1 und die Leitschiene 4. Die Wechseleinrichtung 5 wird hier durch einen Knickarmroboter 38 gebildet, der an einer Linearführung 59 an der innenwand des Containers befestigt ist. Er kuppelt kamerageführt an die Batteriemodule 6 an und zieht diese einzeln auf den Übergabetisch 39, der die Aufnahmevorrichtung für die Batteriemodule 6 während des Transports darstellt. Der Übergabetisch 39 ist in Richtung der Z-Achse verfahrbar und an zwei Führungsblöcken 57 befestigt, die ihrerseits im Hubrahmen 40 in der Y-Achse, also vertikal verfahrbar sind. Der Hubrahmen 40 ist auf einer Tragschiene 47 und einer Führungsschiene 48 in Richtung der X-Achse über die ganze Länge des Regallagers 41 verfahrbar. Im Regallager 41 sind stellvertretend für die anderen lediglich sechs Batteriemodule 6 in ihren Ladeplätzen gezeigt. Insgesamt hat das Regallager 41 eine Anzahl von 9 mal 12, also 108 Ladeplätze, die stets mit 104 Batteriemodulen 6 besetzt sind. Vier Plätze müssen zur Aufnahme von aus dem Fahrzeug 2 entnommenen Modulen frei bleiben. Die Batteriemodule 6 sind über elektrische Kontakte mit dem bidirektionalen Stromrichter 42 verbunden, in den Laderegler für jedes einzelne Batteriemodul 6 integriert sind. Der bidirektionale Stromrichter 42 wiederum ist an das Stromnetz auf Mittelspannungsebene unterirdisch angeschlossen. Ein Kühlaggregat 43 stellt gekühlte Fluide zur eventuellen Kühlung überhitzter Batteriemodule 6 zur Verfugung. Es klimatisiert auch den gesamten Containerinnenraum sowohl in Richtung Kälte als auch Wärme. Insbesondere versorgt es die in seiner Nähe eingerichteten Kühlplätze für überhitzte Batteriemodule 6. Ein automatisches Löschgerät 44 kann Löschmittel über Leitungen und Sprühanlagen in alle Bereiche des Containers bringen. Es wird von den Löschmittelbehältern 45 mit Löschmitteln versorgt. Eine computergestützte Steuerzentrale 46 überwacht und steuert als Master alle Vorgänge der Subsysteme innerhalb des Containers. Es kann mit der Betriebsleitstelle der Batteriewechselstation (1) oder der des Energieversorgers bzw. Netzbetreibers kommunizieren und beeinflusst werden. So ist es möglich, die Anzahl der im Ladeprozess oder im Rückspeiseprozess befindlichen Batteriemodule 6 und die Höhe der Rückspeiseleistung fernzusteuern. Dabei werden einerseits Erfahrungswerte aus dem zeitlichen Verlauf der Nachfrage nach Batteriemodulen 6 und andererseits die Nachfrage nach Strom im Tages-, Wochen und Jahresgang berücksichtigt. Die einzelnen Steuerungsaufgaben ergeben sich in erster Linie aus der zeitlichen Abfolge des Eingangs beschriebenen Prozesses und, parallel dazu, aus einer permanenten Überwachung der Subsysteme. Die Abarbeitung erfolgt nach den in der Automatisierungstechnik seit langem üblichen Prozessen.

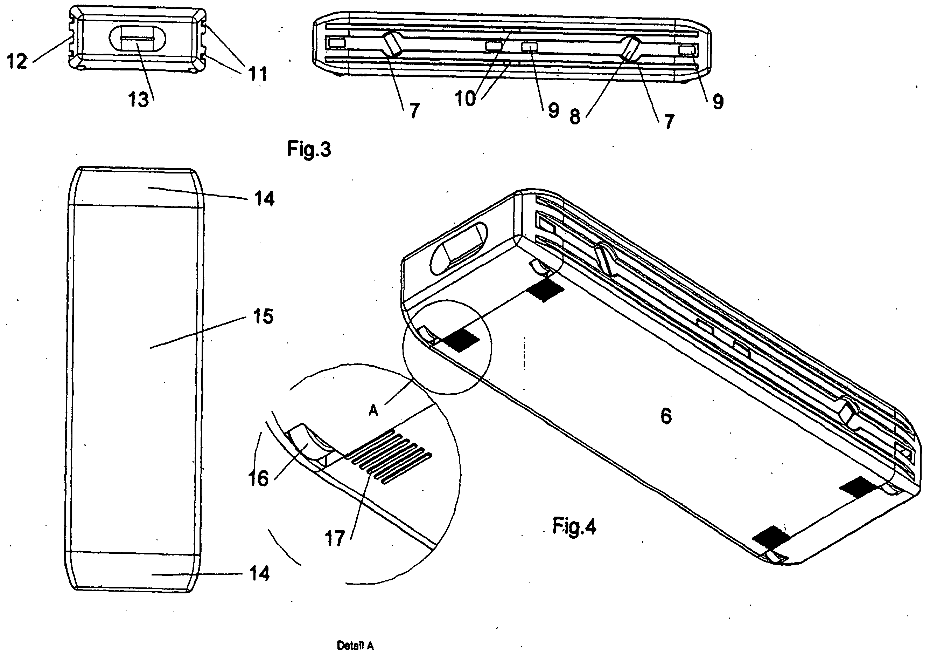

Fig. 2 und 3 zeigen ein Batteriemodul 6 in verschiedenen Ansichten. Das Batteriemodule 6 besitzt die Maße 1,00 x 0,34 x 0,15 m und hat ein Volumen von etwa 50 Litern. Es besteht aus einem Mittelteil 15 aus Edelstahlblech und zwei Endstücken 14 aus schlagzähem Kunststoff. Die Endstücke 14 verjüngen sich vertikal und horizontal beidseitig um etwa 3 Zentimeter. Alle Kanten des Batteriemoduls 6 sind gerundet. Ah der Unterseite sind in der Spur der Transportriemen 49 eine Reihe von Querrippen 17 eingeprägt, die dem sicheren Grip mit dem gezahnten Transportriemen 49 dienen. In den unteren Ecken der Endstücke 14 sind Rollen 16 befestigt, die wenige Millimeter tiefer als die Unterseite stehen und auf denen das Batteriemodul 6 rollen kann. Über beide Längsseiten ziehen sich durchgehende Nuten. Die obere und die untere Kontaktnut 11 sind als Freiraum für die fahrzeugseitigen Gegenstücke der batterieseitigen Kontakte 10, die mittlere Verriegelungsnut 12 für die formschlüssigen Verriegelungselemente 18 und für eventuelle Tragrollen 19 vorgesehen. Die vier Verriegelungselemente 18 können in die Verriegelungstaschen 7 eingeschwenkt werden, wo sie dann auf die schrägen Lufteinlässe 8 ausgerichtet sind. In der Mitte des Moduls und in den Endstücken sind im Bereich der mittleren Verriegellungsnut 12 Luftauslässe vorgesehen. In der Stirnseite des Batteriemoduls 6 ist die Kupplungsmulde 13 konkav eingeformt. Ihre geometrische Form ist durch zwei Halbkegel und ein dachförmiges Mittelteil gegeben.

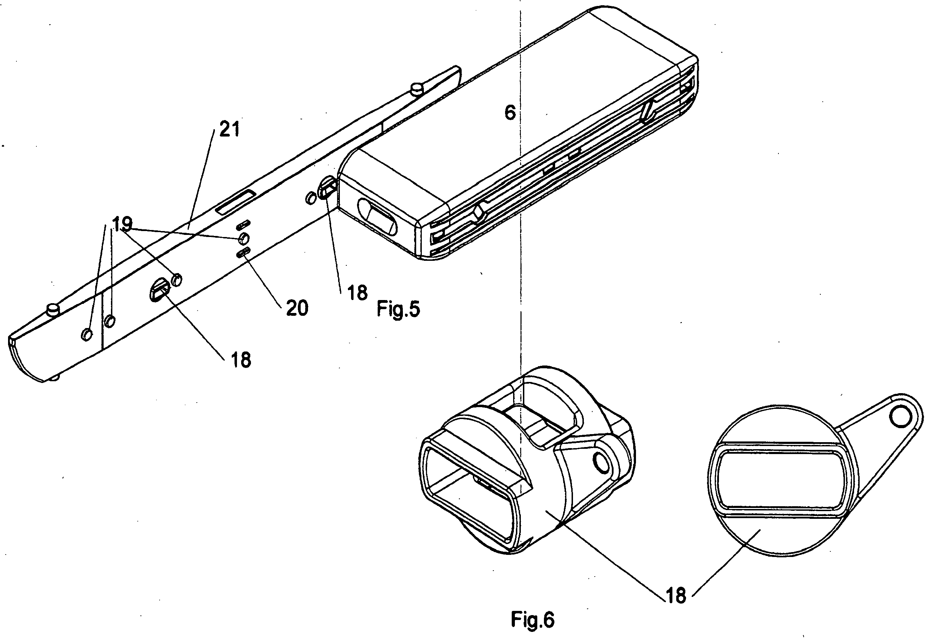

In Fig. 5 ist ein Batteriemodul 6 neben einem Vertikalsteg 21 gezeigt, in den die Verriegelungselemente 18, mehrere Tragrollen 19 und die fahrzeugseitigen Kontakte 20 integriert sind. Die Verriegelungselemente 18 sind in der Stellung entriegelt" gezeigt, das Batteriemodul 6 kann auf den Tragrollen 19 fahrend mit geringen Kräften eingeschoben werden. Der Vertikalsteg 21 besteht aus einem Aluminiumprofil von 3 mm Wandstärke, das sich zu den Enden hin seitlich über eine Strecke von 0,2 m auf die Hälfte verjüngt. Sein Ende ist entsprechend der gewölbten Seitenklappe 30 abgerundet. In der Mitte des Vertikalsteges 21 befindet sich oberseitig eine Öffnung, durch die Kabel geführt und Luft geleitet werden können. Diese Öffnung befindet sich unter dem Mitteltunnel 32 des Fahrzeugchassis 2. Das Verriegelungselement 18 ist in Fig.6 deutlich gezeigt. Man sieht seine Ausbildung als Hohlkörper zur Einleitung von Luft aus dem Inneren des Vertikalsteges 21 in das Batteriemodul 6.

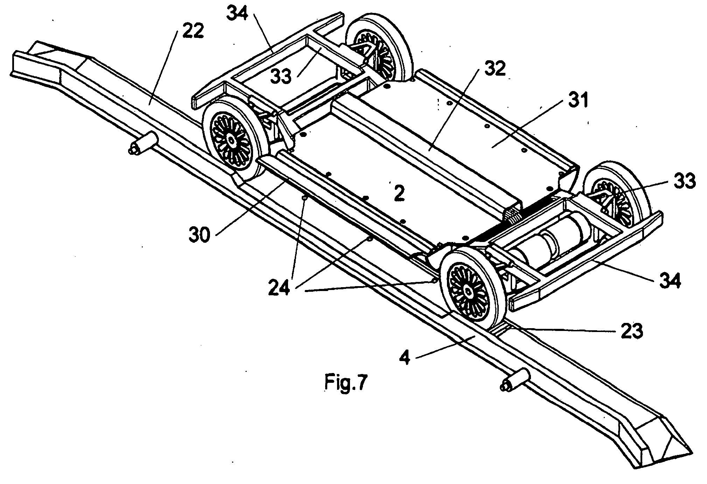

Fig.7 zeigt ein Fahrzeugchassis 2 in optimaler Position an der Leitschiene 4. Die Leitschiene 4 besitzt eine schräg nach oben weisende Bordsteinkante und eine zur Batteriewechselstation 1 um 10° zur Horizontalen geneigte Fahrfläche 22, auf der die Fahrzeugräder abrollen. Auf diese Weise wird das Eigenlenkverhalten des Fahrzeugs 2 zur Ausrichtung benutzt. Das Vorderrad steht an einem aus einem etwa 4 cm hohen Quersteg gebildeten Radanschlag 23 an. Im Bereich der Ausgabeöffnung sind in die Fahrfläche 22 der Leitschiene 4 drei Distanzsensoren 24 eingelassen, die die Bodenfreiheit des Fahrzeugs 2 messen. Das Fahrzeugchassis 2 besteht aus einem Mittelteil in Sandwichbauweise und aus vorderen und hinteren Fahrwerksträgern 33, die mit den Stoßfängern 34 verbunden sind. Das Mittelteil besteht aus einer Bodenplatte 29, fünf Vertikalstegen 21 und einer Deckplatte 31, die untereinander fest verbunden sind. Auf die Deckplatte 31 ist der in Längsrichtung verlaufende Mitteltunnel 32 aufgesetzt. In ihm verlaufen die Stromleitungen und auch die Luftzuführung. Die Seitenklappe 30 ist geöffnet. Die Deckplatte 31 und die Bodenplatte 29 bestehen aus einer höherfesten Aluminiumlegierung.

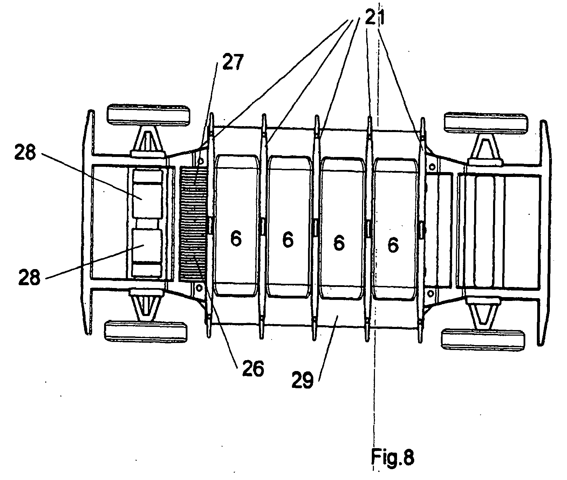

Fig.8 zeigt ein Fahrzeugchassis 2 für vier Batteriemodule 6 in Draufsicht und ohne die Deckplatte 31. Die Batteriemodule 6 sind jeweils durch einen Vertikalsteg 21 voneinander getrennt. Zwischen den beiden Motoren 28, die je ein Vorderrad antreiben und den Batteriemodulen 6 sitzt das Motorleistungsteil 26 und das Modulmanagementsystem 27. Die Batteriemodule 6 werden von unten durch die einige Millimeter starke Bodenplatte 29 geschützt. In dieser Anordnung kann ein sehr tiefer Schwerpunkt, ein optimaler Schutz bei Unfällen und eine ideale Achslastverteilung erzielt werden.

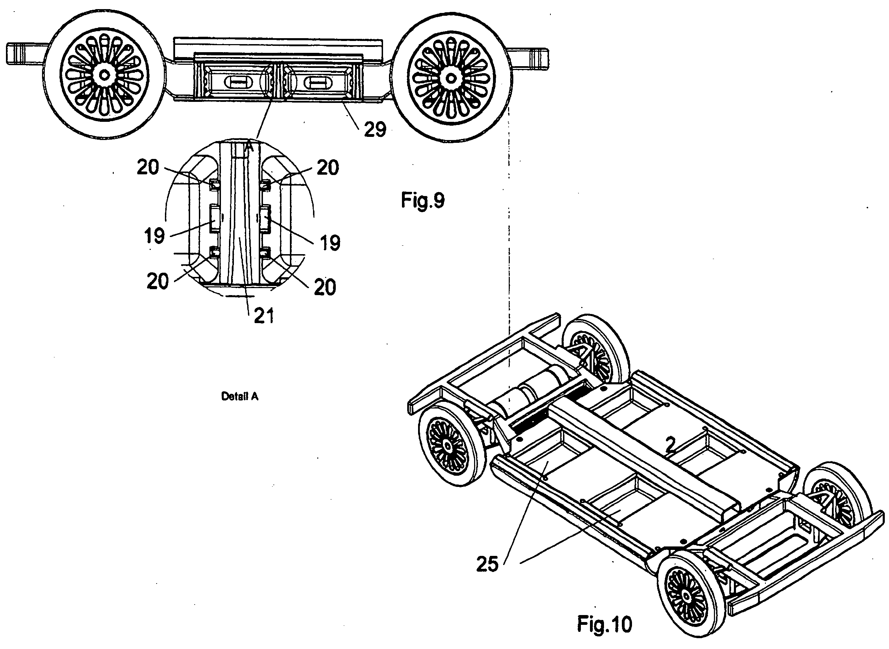

Fig.9 zeigt ein Fahrzeugchassis 2 mit kurzem Radstand für die Aufnahme von zwei Batteriemodulen 6 mit geöffneter Seitenklappe 30 in Seitenansicht und das Detail eines Vertikalstegs 21, an dem die fahrzeugseitigen Stromkontakte 20 und die Tragrollen 19 angebracht sind und die in die entsprechenden Nuten 11, 12 der Batteriemodule 6 eingreifen. Die durchgehenden Nuten 11, 12 erlauben eine beidseitige Batterieentnahme und eine mittige Kontaktierung.

Fig.10 zeigt ein Fahrzeugchassis 2 mit langem Radstand für die Aufnahme von zwei Batteriemodulen 6. Es besitzt vier Fußmulden 25 zur Absenkung der Fußräume und ermöglicht damit eine niedrigere Fahrzeughöhe. Die Batteriemodule 6 sind unter den Fahrzeugsitzen untergebracht.

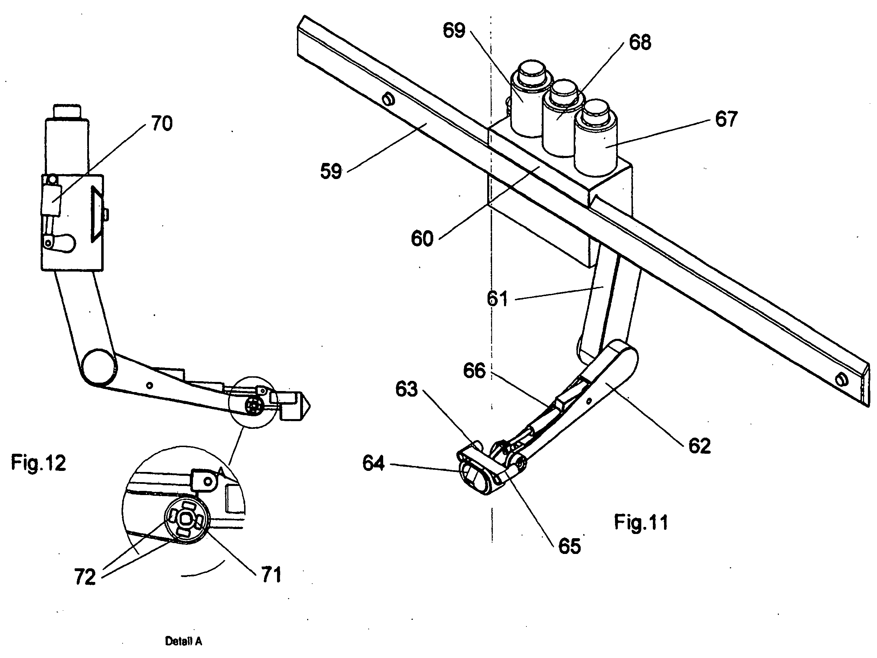

Fig.11 zeigt einen Knickarmroboter 38 als Wechseleinrichtung 5. Ein Schulterschlitten 60 verfährt an einer Linearführung 59 parallel zur x-Achse. Der Schlittenservo 69 treibt den Schulterschlitten 60 mittels Zahnritzel und einer an der Linearführung 59 befestigten Zahnstange an. Der Oberarm 61 des Roboters ist im Schulterschlitten 60 drehbar gelagert und kann um etwa 250° schwenken. Dabei durchdringt eine mit dem Gehäuse des Oberarms 61 verbundene Hohlvirelle das im Schulterschlitten 60 sitzende doppelte Wälzlager. Sie trägt am Ende ein Kegelritzel, das vom Oberarmservo 67 angetrieben wird. In der Hohlwelle ist eine Welle gelagert, die, ebenfalls über ein Kegelrad, vom Unterarmservo 68 angetrieben wird. Am anderen Ende trägt sie ein Zahnritzel, in das eine Zahnkette 73 greift, die zu einem am Unterarm 62 befestigten, gleich großen Zahnritzel führt. Der Unterarm 62 ist am Oberarm 61 in zwei Wälzlagern gelagert. Am anderen Ende trägt er ein Kugelgelenk 71, in dem die Roboterhand 63 gelagert ist. Diese wird vom Handservo 66 in einer annähernd horizontalen Position gehalten, unabhängig von den Bewegungen von Oberarm 61 und Unterarm 62. Die Roboterhand 63 trägt vorne eine konvex geformte Kupplungsnase 64 die exakt in die entsprechende Kupplungsmulde 13 am Batteriemodul 6 passt. Beidseitig daneben ist eine Stereokamera 65 angebracht, deren Bilder dazu dienen, die Position der Batteriemodule 6 im Fahrzeug 2 zu erkennen.

Fig.12 zeigt den Knickarmroboter 38 in Seitenansicht mit Blick auf die Entlastungsfeder 70, die über einen kurzen Hebel auf die Welle drückt, die die Unterarmbewegung überträgt. Sie ist als Gasdruckfeder ausgeführt und in ihrer Kraft so bemessen, dass sie das Gewicht des Unterarms 62 und der Roboterhand 63 weitgehend ausgleicht. In der Detailansicht ist das Kugelgelenk 71 mit den Lagesensoren 72 gezeigt. Das Kugelgelenk 71 erlaubt der Roboterhand 63 eine Beweglichkeit in allen Achsen von +/- 5°. Ein Federnsystem stellt die Roboterhand 63 in etwa in die Mittellage ein.

Fig. 3 zeigt den Knickarmrobotor mit einem Detail der Kraftübertragung auf den Unterarm 62 mittels Zahnkette 73. Sie ist etwa 45 mm breit und kann ein hohes Drehmoment übertragen. Durch die geringe Laufgeschwindigkeit, den geringen Laufweg im Laufe der gesamten Betriebszeit und durch eine Kapselung und Fettschmierung verschleißt sie praktisch nicht.

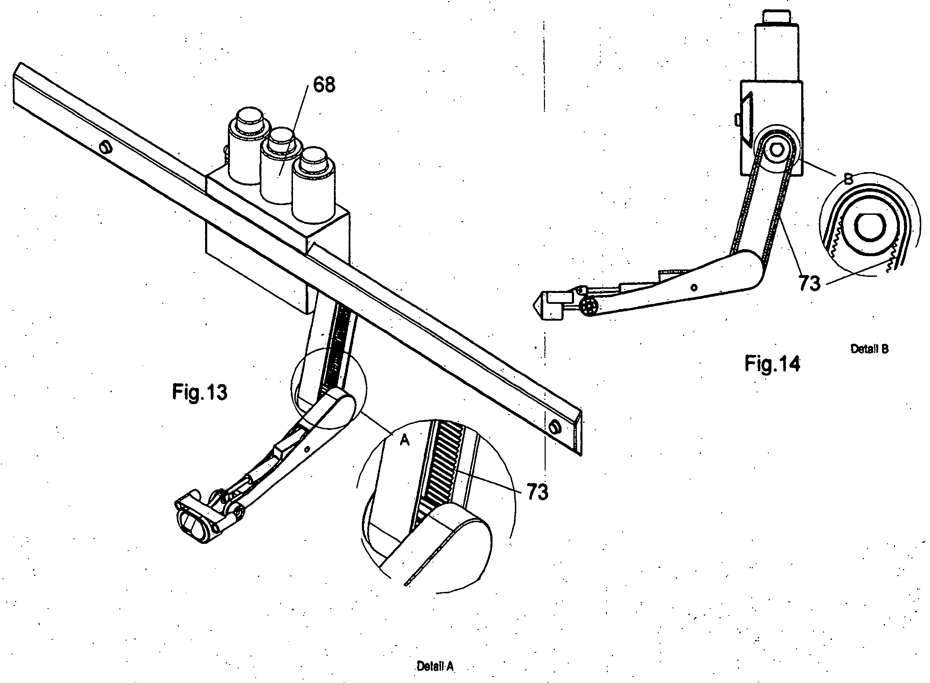

Fig. 14 zeigt den Knickarmroboter 38 in Seitenansicht und das Detail des Zahnkettenantriebs am Gelenk des Oberarms.

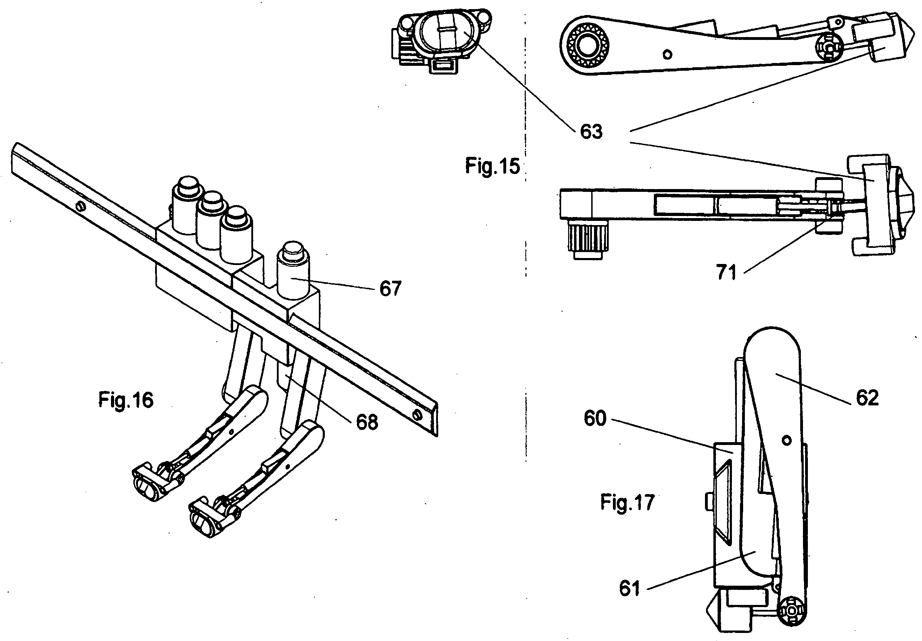

Fig. 15 zeigt den Unterarm 62 zusammen mit der Roboterhand 63, die hier in allen Raumebenen um wenige Winkelgrade gedreht ist. Durch diese Beweglichkeit um das Kugelgelenk 71 ist es möglich, in allen zulässigen Fahrzeugpositionen an das Batteriemodul 6 zu kuppeln. Dabei richtet sich die Roboterhand 63 unter Wirkung der vom Elektromagneten erzeugten Zugkraft dank der formschlüssigen Kupplungsnase 64 am Batteriemodul 6 selbsttätig aus. Der Elektromagnet bildet zwei Pole aus, deren Feldlinien in der Kupplungsmulde 13 des Batteriemoduls 6 durch ein dickes Eisenblech verbunden werden.

Fig. 16 zeigt einen doppelarmigen Knickarmroboter 38, der zwei Batteriemodule 6 gleichzeitig wechseln kann. Dabei sind beide Armsätze um das Rastermaß, das im Beispiel 0,4 m beträgt, seitlich versetzt. Sie sind bis auf die Bewegung in der X-Achse in ihrer Bewegung unabhängig und werden jeweils von separaten Servomotoren gesteuert. Dabei ist der Unterarmservo 68 nach unten weisend gegenüber dem Oberarmservo 67 montiert.

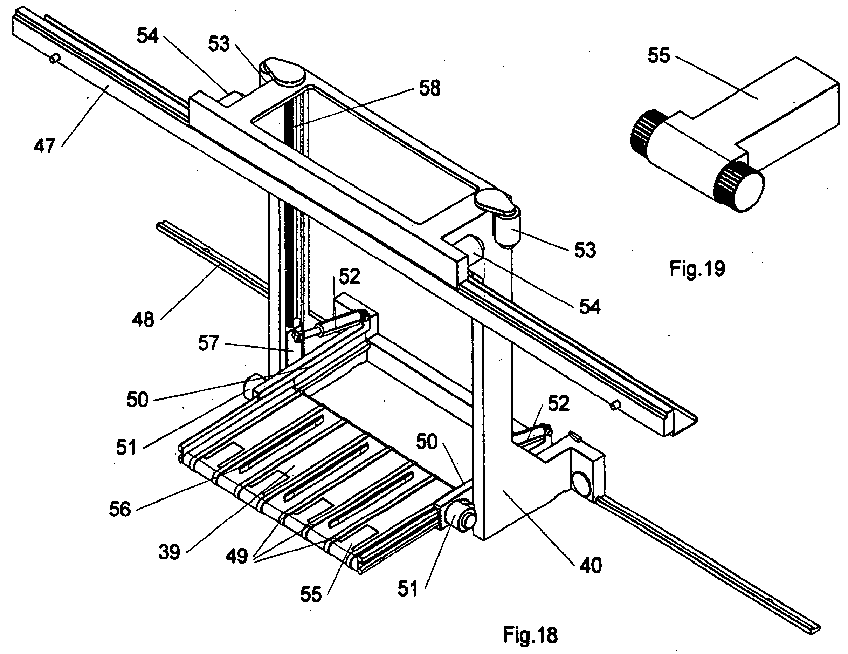

Fig. 17 zeigt den Knickarmroboter 38 in Parkstellung. Oberarm 61 und Unterarm 62 sind platzsparend nebeneinander geschwenkt. In dieser Stellung kann die Schiebetür 37 geschlossen werden und die Transporteinrichtung kann hinter dem Knickarmroboter 38 uneingeschränkt verfahren.

Fig.18 zeigt die Transporteinrichtung. Sie besteht aus einem Hubrahmen 40, der an einer Tragschiene 47 auf zwei Schienenrädern läuft. Zwei Fahrmotoren 54 treiben den Hubrahmen 40 mittels eines Zahnstangenantriebs an. Unten auf der Seite des Regallagers 41 wird der Hubrahmen 40 durch eine Führungsschiene 48 geführt, die am Containerboden befestigt ist. Die Innenseiten der beiden Säulen des Hubrahmens 40 sind als Linearführung für je einen Führungsblock 57 ausgebildet. Diese werden von je einer Hubspindel 58, die von je einem Hubservo 53 angetrieben wird, nach oben oder unten bewegt. In jedem Führungsblock 57 befindet sich ein Kugelgelenk, in dem je eine Querschiene 50 mittels Zapfen gelagert ist. Einer der beiden Zapfen ist zusätzlich gegen axiales Verschieben festgelegt. Damit können die Querschienen 50 zusammen mit dem in ihnen in einer Linearführung gelagerten Übergabetisch 39 um 5° in jeder Richtung geschwenkt werden. Der Übergabetisch 39 kann in beide Richtungen verfahren, in Richtung der Ausgabeöffnung aber wesentlich mehr als in Richtung Regallager 41. Daher sind die beiden Querantriebe 51 asymmetrisch angeordnet. Der Übergabetisch 39 kann vier Batteriemodule 6 gleichzeitig aufnehmen. Sie werden durch drei, einige Zentimeter hohe Führungsstege 56 geführt. Der Transport der Batteriemodule 6 auf dem Übergabetisch 39 erfolgt durch je zwei Transportriemen 49, die als doppelseitiger Zahnriemen ausgeführt sind, auf deren Rücken die Batteriemodule 6 aufsetzen. Der Antrieb erfolgt paarweise über vier Riemenservos 55, die in den Übergabetisch 39 eingelassen sind. Der Übergabetisch 39 ist nur etwa 8 cm dick, so dass er auch tief im Fahrzeug 2 angeordnete Batteriemodule 6 aufnehmen kann. Regalseitig beträgt die Stärke sogar nur 5,5 cm, damit der Übergabetisch 39 ein Stück zwischen die Batteriemodule 6 fahren kann, ohne dass die Regalböden zu dick ausgeführt werden müssten, was Lagerkapazität kosten würde. Die Neigung des Übergabetischs 39 wird von zwei Neigungsservos 52 eingestellt, die an den Querschienen 50 und an den Führungsblöcken 57 mit Kugelgelenken befestigt sind.

Fig.19 zeigt einen Riemenservo 55, dessen Gehäuse die gleiche Höhe hat wie der Übergabetisch 39 und der die beiden Riemenritzel über ein Kegelgetriebe antreibt.

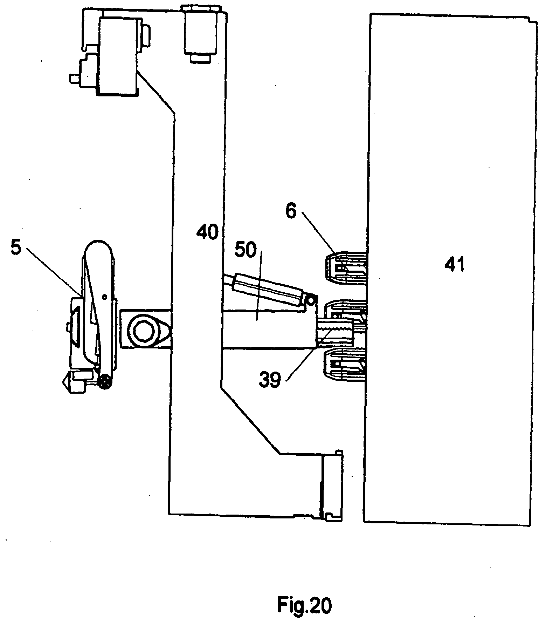

Fig.20 zeigt einen Blick in die Fahrgasse der Transporteinrichtung. Der Übergabetisch 39 ist einige Zentimeter unter ein Batteriemodul 6 eingefahren, um dieses anzuheben und per Riementransport herauszuziehen. Die Batteriemodule ragen etwa 20% ihrer Länge über die Front des Regallagers 41 hinaus. In dieser Position haben sie Kontakt mit regalseitigen Stromkontakten über die der Leistungsstrom, aber auch die Datensignale in sogenannter Powerline-Kommunikation ausgetauscht werden können. Diese Stromkontakte sind federnd angebracht und können eine Vertikalbewegung der Batteriemodule 6 um einige Millimeter ausgleichen. Die Wechseleinrichtung 5 ist in die Parkstellung gefahren.

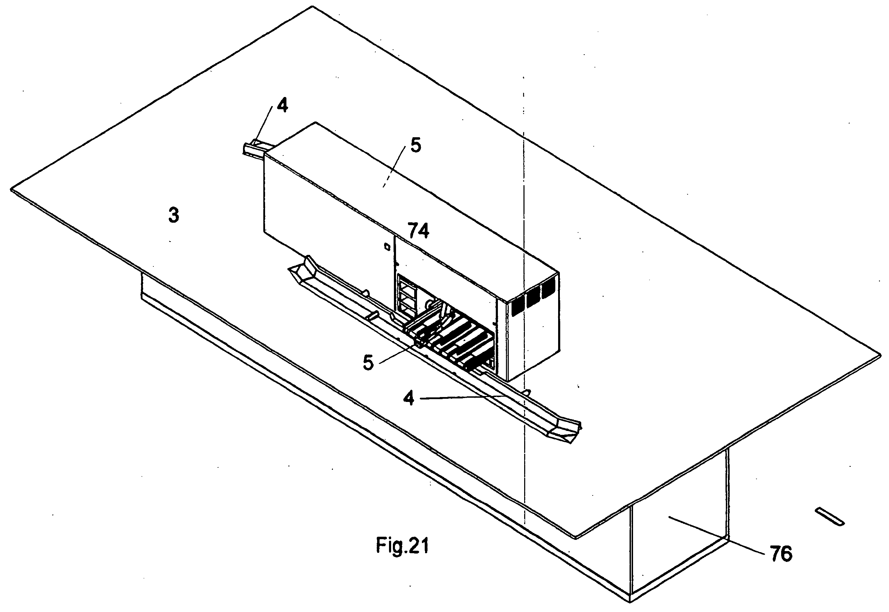

Fig.21 zeigt ein Batteriewechselstation 1 mit unterirdischer Lagerung der Batteriemodule 6 in einem 40'-Container 76. Sie hat zwei Wechseleinrichtungen 5 mit zugehörigen Leitschienen 4. Das Robotergehäuse 74 schützt die technischen Einrichtungen. Es hat zwei Schiebetüren und ist etwa einen Meter schmaler als der Standardcontainer. Zu jeder Wechseleinrichtung (5) gehört ein Telekophubrahmen 75 und ein Übergabetisch 39.

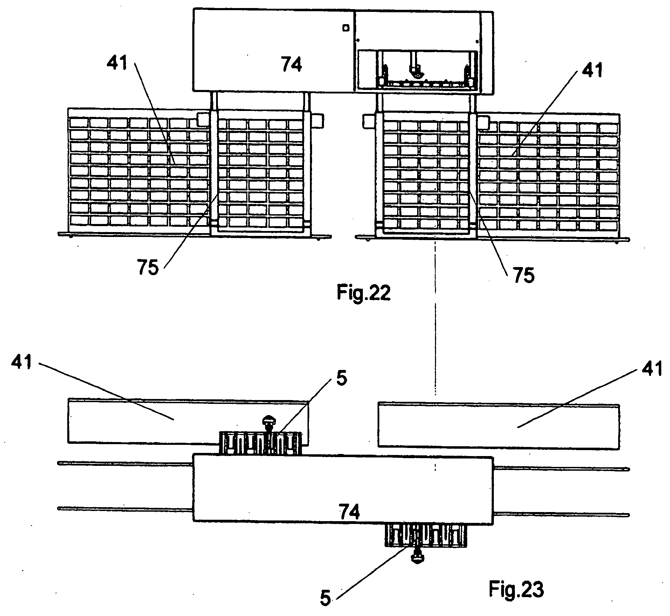

Fig.22 zeigt eine solche Batteriewechselstation 1 in Frontansicht ohne Containergehäuse und Nebenaggregate. Jeder Wechseleinrichtung 5 ist ein Regallager 41 zugeordnet. Diese Batteriewechselstation 1 hat also die doppelte Kapazität und den doppelten Fahrzeugdurchsatz bei gleichzeitig verringertem oberirdischem Flächenbedarf.

Fig. 23 zeigt diese Station in Draufsicht

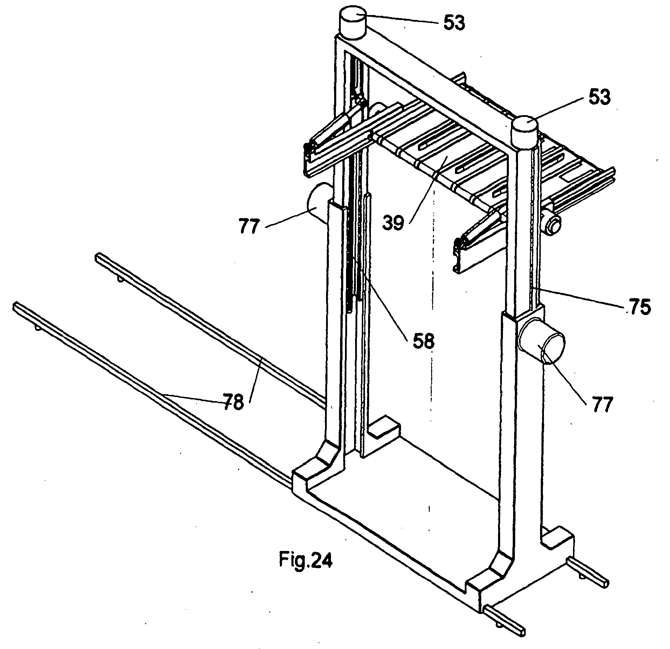

Fig.24 zeigt einen Telekophubrahmen 75, der auf Bodenschienen 78 fährt. Der obere Teil wird von zwei Teleskophubmotoren 77 vertikal bewegt. Im Oberen Teil ist der Übergabetisch 39 analog zur oben beschriebenen überirdischen Station aufgehängt. Auch hier kommen zwei Hubspindeln 58 zum Einsatz, die von den beiden Hubservos 53 angetrieben werden. Die gesamte Verfahrhöhe beträgt ca. 3 m.

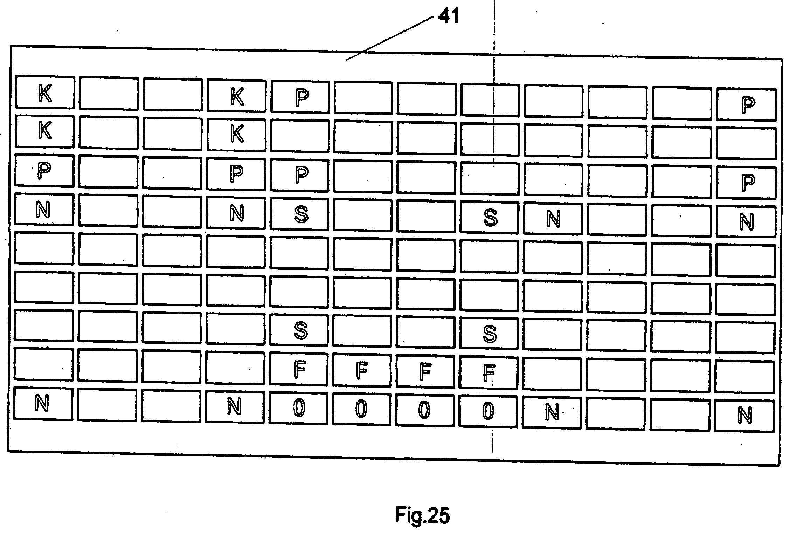

Fig.25 zeigt ein Regallager 41 mit einem schematischen Belegungsplan. Die zwischen gleichnamigen Buchstaben befindlichen Regalplätze sind mit gleichen Buchstaben gekennzeichnet zu denken. Es bedeuten: 0 = unbelegte Plätze zur Aufnahme von Fahrzeugbatterien; F = fertiggeladener optimal zusammengestellter Batteriesatz;
S = weitere fertig oder teilgeladene Batteriemodule 6 der leistungsstarken Kategorie "Super"; N = weitere fertig oder teilgeladene Batteriemodule 6 der Kategorie "Normal"; P = normale oder relativ schwache Batteriemodule 6 zur teilweisen oder ausschließlichen Pufferung von Strom; K = Kühlplätze für temperaturkritische Batteriemodule 6.

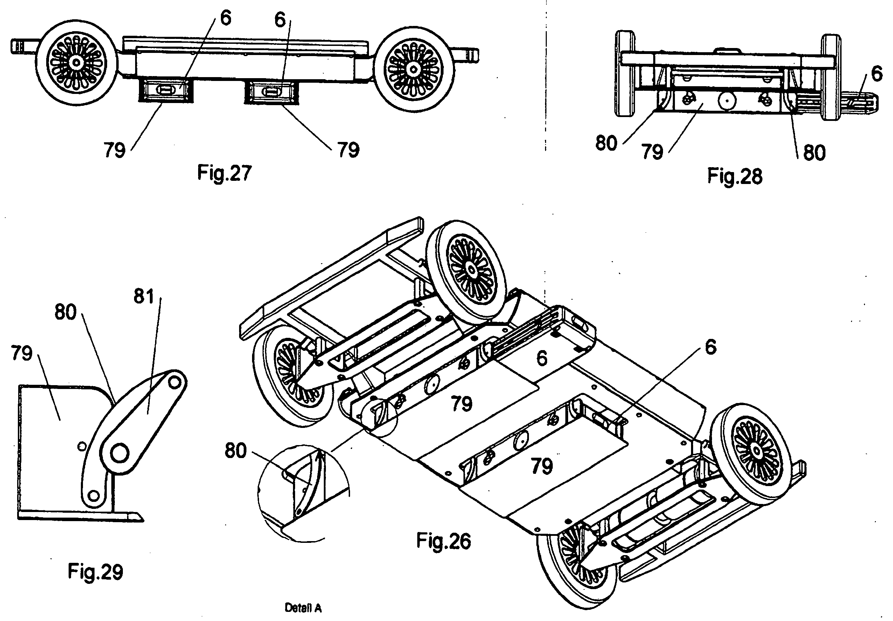

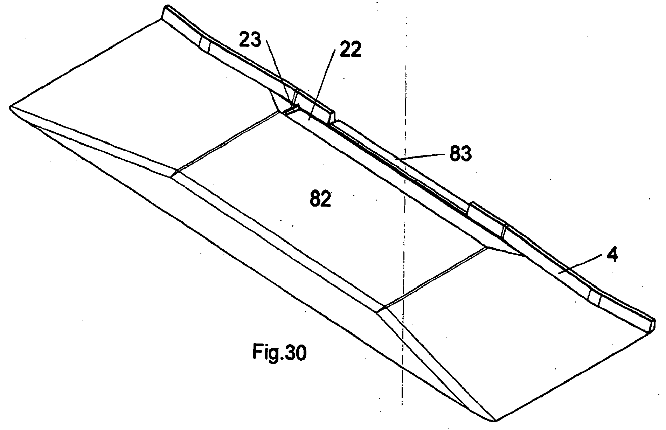

Fig.26 zeigt ein Fahrzeugchassis, das Bodenklappen 79 besitzt, in einer Ansicht schräg von unten, bei abgesenkten Bodenklappen 79 und mit einem teilweise herausgezogenen Batteriemodul 6. Diese tragen die Batteriemodule 6 und besitzen zwei seitliche Stege, die die fahrzeugseitigen Kontakte 20 und die Verriegelungselemente 18 tragen. Die Bodenklappen 79 sind an vier Hubstangen 80 aufgehängt, die wiederum an Schwenkhebeln 81 gelenkig befestigt sind. Diese Schwenkhebel 81 sind durch einen Servomotor angetrieben. In der Verschlussposition sind sie ein Stück über den Totpunkt des Hebewerks geschwenkt, so dass die Bodenklappen 79 mit hoher Kraft gegen die Dichtlippen zwischen Fahrzeugboden und Bodenklappe 79 gezogen werden können und sicher verriegelt sind. Dies ist in Fig. 29 gezeigt. Zusätzlich werden die Bodenklappen 79 durch einen am Fahrzeugchassis 2 und an den Wangen der Bodenklappe 79 angreifenden Stab geführt, der die beim Wechselvorgang auftretenden seitlichen Kräfte abstützt.

Fig.27 zeigt ein solches Fahrzeugchassis 2 in Seitenansicht. Man sieht, dass die Batteriemodule 6 von der Seite her zugänglich sind und von der Wechseleinrichtung 5 in gleicher Weise wie oben beschrieben entnommen werden können. Dazu muss der Übergabetisch 39 entsprechend tief abgesenkt werden oder das Fahrzeug 2 entsprechend erhöht werden können, z.B. durch eine erhöhte Stellfläche 82.

Fig.28 zeigt ein solches Fahrzeugchassis 2 in Heckansicht.

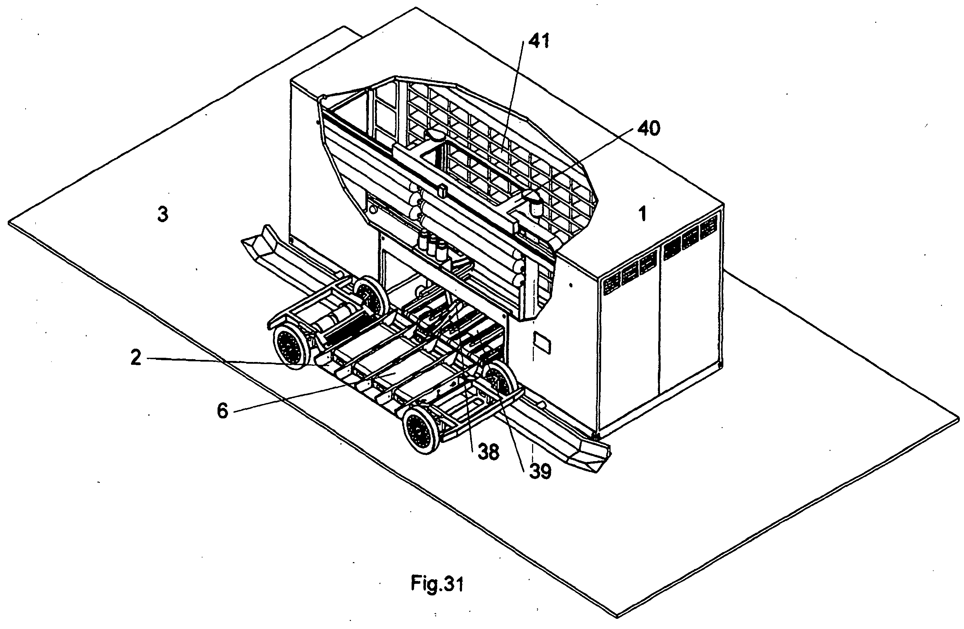

Fig.30 zeigt eine erhöhte Stellfläche 82. Sie ist mit der Leitschiene 4 verbunden, die ein schwenkbares Mittelstück 83 besitzt, das, wie in der Zeichnung dargestellt, zum Batteriewechsel servomotorisch heruntergeklappt wird. Die Stellfläche 82 besitzt zwei flache Rampen zur Auf- und Abfahrt der Fahrzeuge 2. In der um 10° zur Leitschiene (4) geneigten Fahrfläche 22 befindet sich ein Radanschlag 23, der dem Fahrer die richtige Position zum Anhalten anzeigt und spürbar macht.

Fig.31 zeigt die Batteriewechselstation (1) mit zur besseren Übersicht halb aufgeschnittenem Container.

**Liste der Bezugszeichen**

| | | | |
|---|---|---|---|
| Batteriewechselstation | 1 | Deckplatte | 31 |
| Fahrzeug | 2 | Mitteltunnel | 32 |
| Bodenfläche | 3 | Fahrwerksträger | 33 |
| Leitscheine | 4 | Stoßfänger | 34 |
| Wechseleinrichtung | 5 | Überwachungskamera | 35 |
| Batteriemodul | 6 | Signallampe | 36 |
| Verriegelungstasche | 7 | Schiebetür | 37 |
| Lufteinlass | 8 | Knickarmroboter | 38 |
| Luftauslass | 9 | Übergabetisch | 39 |
| batterieseitiger Kontakt | 10 | Hubrahmen | 40 |
| Kontaktnut | 11 | Regallagers | 41 |
| Verriegelungsnut | 12 | bidirektionaler Stromrichter | 42 |
| Kupplungsmulde | 13 | Kühlaggregat | 43 |
| Endstück | 14 | Löschgerät | 44 |
| Mittelteil | 15 | Löschmittelbehälter | 45 |
| Rolle | 16 | Steuerzentrale | 46 |
| Querrippen | 17 | Tragschiene | 47 |
| Verriegelungselement | 18 | Führungsschiene | 48 |
| Tragrollen | 19 | Transportriemen | 49 |
| fahrzeugseftiger Kontakt | 20 | Querschiene | 50 |
| Vertikalsteg | 21 | Querantrieb | 51 |
| Fahrfläche der Leitschiene | 22 | Neigungsservo | 52 |
| Radanschlag | 23 | Hubservo | 53 |
| Distanzsensor | 24 | Fahrmotor | 54 |
| Fußmulde | 25 | Riemenservo | 55 |
| Motorleistungsteil | 26 | Führungssteg | 56 |
| Modulmanagementsystem | 27 | Führungsblock | 57 |
| Motor | 28 | Hubspindel | 58 |
| Bodenplatte | 29 | Linearführung | 59 |
| Seitenklappe | 30 | Schulterschlitten | 60 |
| Unterarm | 62 | | |
| Roboterhand | 63 | | |
| Kupplungsnase | 64 | | |
| Stereokamera | 65 | | |
| Handservo | 66 | | |
| Oberarmservo | 67 | | |
| Unterarmservo | 68 | | |
| Schlittenservo | 69 | | |
| Entlastungsfeder | 70 | | |
| Kugelgelenk | 71 | | |
| Lagesensoren | 72 | | |
| Zahnkette | 73 | | |
| Robotergehäuse | 74 | | |
| Teleskophubrahmen | 75 | | |
| 40" Container | 76 | | |
| Teleskophubmotor | 77 | | |
| Schiene | 78 | | |
| Bodenklappe | 79 | | |
| Hubstange | 80 | | |
| Schwenkhebel | 81 | | |
| Stellfläche | 82 | | |
| Mittelstück | 83 | | |

## Patentansprüche

1. Verfahren zur Energieversorgung von Fahrzeugen (2), die aus Wechselbatterien bestehende Batteriemodule (6) aufnehmen, mit mindestens einer Wechseleinrichtung (5) für den Wechsel und Transport der Batteriemodule (6) und mit mindestens einem Batterielager (1) zur Aufbewahrung und Ladung der Batteriemodule (6), wobei die Entnahme der Batteriemodule (6) aus dem Fahrzeug (2) und das Beladen des Fahrzeugs (2) mit Batteriemodulen (6) durch die Wechseleinrichtung (5) erfolgt, wobei die Fahrzeugbatterie je nach Fahrzeugtyp aus zwei oder aus mehreren dieser Batteriemodule (6) besteht und wobei die Batteriemodule (6) erst nach dem Einsetzen ins Fahrzeug (2) untereinander über fahrzeugseitige Kontakte (20) elektrisch verbunden werden,
**dadurch gekennzeichnet, dass** die Wechseleinrichtung automatisiert ist,
dass je nach Fahrzeugtyp zwei oder mehrere Aufnahmeraume für die Batteriemodule (6) vorhanden sind, in die jeweils eines dieser Batteriemodule (6) eingeschoben wird,
dass die in den Batteriemodulen (6) enthaltene Energie im Fahrzeug gleichzeitig entnommen wird,
dass die Batteriemodule (6) voneinander unabhängig sind und in der Batteriewechselstation (1) vor dem Beladen des Fahrzeuges (2) zu zum jeweiligen Fahrzeugtyp in Leistungsfähigkeit und Anzahl passenden, neuen Batteriesätzen zusammengestellt werden.

2. Verfahren zur Energieversorgung von Fahrzeugen (2) nach Anspruch 1,
**dadurch gekennzeichnet,**
**dass** die einzelnen Batteriemodule (6) im Bereich zwischen den Radachsen und etwa auf Höhe der Radachsen eines Fahrzeuges (2) angeordnet sind,
**dass** die Entnahme der Batteriemodule (6) aus dem Fahrzeug (2) und das Einsetzen ins Fahrzeug (2) durch die Wechseleinrichtung (5) seitlich, also in Querrichtung des Fahrzeugs (2) und von derselben Fahrzeugseite aus erfolgt,
**dass** die Wechseleinrichtung (5) mindestens einen mehrachsigen Roboter besitzt, der an oder nahe der zu ihm hin weisenden Stirnseite der Batteriemodule (6) an diese kuppelt,
**dass** die Wechseleinrichtung (5) eine in mindestens drei Achsen bewegliche Aufnahmevorrichtung (Übergabetisch 39) besitzt, die mehrere Batteriemodule (6) aufnimmt und transportiert,
und **dass** Fluchtungsfehler zwischen dem stehendem Fahrzeug (2) und der Wechseleinrichtung (5) über eine mehrachsige Lageanpassung der Wechseleinrichtung (5) unter Benutzung einer sensorgestützte Lageerkennung für die Position und Ausrichtung des Fahrzeugs (2) oder der Batteriemodule (6) ausgeglichen werden, ohne das Fahrzeug (2) aktiv zu verdrehen oder zu verschieben.

3. Verfahren zur Energieversorgung von Fahrzeugen (2) nach Anspruch 1 oder 2, **dadurch gekennzeichnet, dass** die Batteriemodule (6) in der Batteriewechselstation (1) auf einzelnen Ladeplätzen mit separater Stromversorgung und mit einem jedem Ladeplatz einzeln zugeordneten und einzeln geregelten Ladegerät platziert sind,
dass die Batteriewechselstation (1) als Regallager (41) ausgebildet ist,
dass die Einlagerung der Batteriemodule (6) individuell nach freien Plätzen vorgenommen wird
und dass ihre Ausgabe nach Ladezustand und nach optimal passender Leistungsfähigkeit innerhalb eines aus zwei oder mehreren Batteriemodulen (6) bestehenden Batteriesatzes erfolgt.

4. Verfahren zur Energieversorgung von Elektrofahrzeugen nach einem der Ansprüche 1-3, **dadurch gekennzeichnet,**
**dass** das Fahrzeug (2) ein Modulmanagementsystem (27) besitzt, das die einzelnen Batteriemodule (6) und deren Zusammenspiel überwacht, wobei es die einzelnen Batteriemodule (6) nach ihrer jeweiligen Leistungsfähigkeit belastet und wofür es die in den Batteriemodulen (6) gespeicherten Daten benutzt oder einen Belastungstest der Batteriemodule (6) durchführt.

5. Verfahren nach einem der Ansprüche 1 bis 4, **dadurch gekennzeichnet, dass** die an den batterieseitigen Kontakten (10) anliegende Spannung der Batteriemodule (6) auf die Kleinspannungsgrenze von 120 V beschränkt wird und dass die Batteriemodule (6) durch eine innere Aufteilung in zwei Zellgruppen und durch eine Verdopplung der Kontakte zum Fahrzeug (2) pro Modul zwei Spannungsniveaus im Verhältnis 2:1 bieten, je nachdem, ob die Kontakte im Fahrzeug (2) in Reihe oder parallel verbunden werden.

6. Verfahren nach einem der Ansprüche 1 bis 5, **dadurch gekennzeichnet, dass** Batteriemodule (6) mit folgenden Eigenschaften benutzt werden:
dass das Modulgehäuse aus zwei sich verjüngenden Endstücken (14) und aus einem Mittelstück (15) mit im Wesentlichen konstantem Querschnitt zusammengesetzt ist, wobei die Endstücke (14) vorzugsweise aus schlägzähem Kunststoff und das Mittelstück (15) aus Metall bestehen, und
dass die Batteriemodule (6) mit der Fahrzeugstruktur durch Verriegelungselemente (18) formschlüssig verriegelt und zum Wechseln entriegelt werden können, wobei vorzugsweise die Verriegelung beim Einschieben zumindest bei einem Verriegelungselement (18) pro Batteriemodul (6) selbsttätig erfolgt, und
dass vorzugsweise die Körper der Verriegelungselemente (18) als Zuführkanal für das Kühlfluid in das Batteriemodul (6) ausgebildet sind, und dass die Verriegelungselemente (18) vorzugsweise an den beiden Längsseiten des Batteriemoduls (6) in entsprechende Aussparungen eingreifen und
dass die elektrischen Kontakte vorzugsweise an den beiden Längsseiten angeordnet sind.

7. Verfahren nach einem der Ansprüche 1 bis 6, **dadurch gekennzeichnet, dass** Fahrzeuge (2) mit folgenden Merkmalen benutzt werden:
die Aufnahmeräume sind in ein selbsttragendes Chassis integriert, auf das der Karosserieaufbau gesetzt werden kann, wobei das selbsttragende Chassis wenigstens die Hälfte der auf die Karosserie einwirkenden Biege-, Stoß- und Torsionskräfte aufnehmen kann,
das selbsttragende Chassis besteht vorzugsweise aus vorderen und hinteren Fahrwerksträgern (33) mit Stoßfängern (34) und aus einer mit diesen Fahrwerksträgern (33) verbundenen Sandwichkonstruktion, die wiederum aus einer Bodenplatte, (29) aus einer Deckplatte (31) und aus mehreren beide Platten verbindenden Stegen zusammengesetzt ist und wobei das selbsttragende Chassis überwiegend aus Leichtmetall oder Faserverbundwerkstoffen besteht,
die Aufnahmeräume sind durch Vertikalstege (21) voneinander getrennt, wobei die Aufnahmeräume entweder nebeneinander liegen oder um etwa ein Rastermaß getrennt sind und dass die Deckplatte (31) dann in diesem Zwischenbereich eine oder mehrere Fußmulden (25) für den Fußraum der Passagiere aufweist.

8. Verfahren nach einem der Ansprüche 1 bis 7, **dadurch gekennzeichnet, dass** die Wechseleinrichtung (5) eine sensorgestützte Lageerkennung der im Fahrzeug (2) befindlichen Batteriemodule (6) aufweist, und
dass sie in Abhängigkeit von der Lageerkennung den Knickarmroboter (38) und den Übergabetisch (39) auf die Fahrzeugposition in allen sechs Bewegungsachsen ausrichtet, wobei die beiden Hubservos (51) und die beiden Querantriebe (53) des Übergabetischs (39) nicht nur die Ausrichtung in vertikaler und seitlicher Richtung übernehmen, sondern durch eine Differenz in den jeweiligen Verfahrwegen auch die notwendige Rotation um die horizontale Z-Achse und die vertikale Y-Achse, und wobei die Rotation um die horizontale X-Achse von zwei Neigungsservos (52) eingestellt wird, und
dass die beiden Querschienen (10) des Übergabetischs (39) mittels je eines Gelenkes, das drei Freiheitsgrade der Rotation besitzt, in je einem Führungsblock (57) gelagert sind, der mittels einer Linearführung am Hubrahmen (40) vertikal beweglich ist, und wobei eines der Gelenke auch einen linearen Freiheitsgrad besitzt, und
dass sich in der Bodenfläche (3) oder in der Fahrfläche (22) der Leitschiene (4) Distanzsensoren (24) befinden, die eine Messung der Bodenfreiheit des Fahrzeugs (2) während des Wechselvorgangs vornehmen.

9. Verfahren nach einem der Ansprüche 1 bis 8, **dadurch gekennzeichnet, dass** das Fahrzeug (2) durch eine vor der Batteriewechselstation (1) auf dem Boden angebrachte Leitschiene (4) in eine in der Z-Achse günstige Position geführt wird, wobei die Leitschiene (4) die äußere Reifenflanke durch eine schräg nach oben weisende Bordkante führt und eine zur Bordkante geneigte Fahrfläche (22) besitzt, die ein zur Bordkante weisendes Lenkmoment an den Vorderrädern erzeugt, und
dass die geneigte Fahrfläche (22) deutlich breiter als die gebräuchlichen Reifenbreiten ist, wobei sie vorzugsweise um Winkel zwischen 8° und 12° zur Horizontalen geneigt ist, und
dass die günstige X-Position des Fahrzeugs (2) durch eine Radmulde in der Fahrfläche (22) der Leitschiene (4) oder durch einen oder zwei Querstege als Radanschlag (23) auf der Fahrfläche (22) der Leitschiene (4) markiert ist, wobei die Tiefe der Radmulde oder die Höhe der Querstege so groß bemessen sind, dass ein für den Fahrer deutlich wahrnehmbarer Widerstand am Reifen erzeugt wird, und
dass vorzugsweise die Leitschiene (4) im Bereich vor der Ausgabeöffnung ein schwenkbares Mittelstück (83) besitzt, das heruntergeklappt wird, wenn tief positionierte Batteriemodulen (6) gewechselt werden.

10. Verfahren nach einem der Ansprüche 1 bis 9, **dadurch gekennzeichnet, dass** die in den Ladeplätzen befindlichen Batteriemodule (6) über bidirektionale AC-DC-Wandler mit dem Stromnetz verbunden sind und sowohl Energie aus dem Netz aufnehmen, als auch Energie ins Netz abgeben, wobei vorzugsweise ins Mittelspannungsnetz eingespeist wird und
dass im Regallager (41) spezielle Kühlplätze zur raschen Kühlung überhitzter Batteriemodule (6)vorhanden sind, und
dass das Regallager (41) mit der Wechsel- und Transporteinrichtung, mit den Steuerungs-, Klimatisierungs- und Löscheinrichtungen sowie mit der Lade- und Leistungselektronik in einem Container mit Normmaßen untergebracht ist, vorzugsweise in einem 20-Fuß-Container.

## Claims

1. Method for the supplying of energy to vehicles (2) which incorporate battery modules (6) consisting of replacement batteries, with at least one replacement device (5) for the replacement and transportation of the battery modules (6) and with at least one battery storage (1) for the storage and charging of the battery modules (6), whereby the withdrawal of the battery modules (6) from the vehicle (2) and the loading of the vehicle (2) with battery modules (6) is realised by means of the replacement device (5), whereby the vehicle battery comprises, depending on the type of vehicle, two or more of these battery modules (6), and whereby the battery modules (6) are only electrically connected with each other after insertion in the vehicle (2) by means of on-board contacts (20),
**characterised in**
**that** the replacement device is automated,
**that** depending on the type of vehicle, there are two or more receiving spaces for the battery modules (6) in which one of these battery modules (6) each is inserted,
**that** the energy contained in the battery modules (6) is withdrawn simultaneously,
**that** the battery modules (6) are independent of each other and are grouped into new battery sets that are suitable for the respective type of vehicle with regard to performance and number in the battery replacement station (1) before the vehicle (2) is loaded.

2. Method for supplying energy to vehicles (2) according to claim 1,
**characterised in**
**that** the individual battery modules (6) are arranged in the area between the axles and approximately on the level of the axles of a vehicle (2),
**that** the withdrawal of the battery modules (6) from the vehicle (2) and their insertion in the vehicle (2) are realised by means of the replacement device (5) at the side, i.e. in crosswise direction of the vehicle (2) and from the same side of the vehicle,
**that** the replacement device (5) is equipped with at least one multi-axle robot, which connects to the battery modules (6) on or close to their front side that is pointed towards it,
**that** the replacement device (5) is equipped with a receiving device mobile in at least three axes (delivery table 39), which receives and transports several battery modules (6),
and **that** misalignments between the stationary vehicle (2) and the replacement device (5) are compensated by means of a multi-axis positional adjustment of the replacement device (5) using a sensor-aided position detection mechanism for the position and alignment of the vehicle (2) or the battery modules (6) without requiring an active rotating or moving of the vehicle (2).

3. Method for supplying energy to vehicles (2) according to claim 1 or 2,
**characterised in that** the battery modules (6) are arranged in the battery replacement station (1) in individual charging stations with separate power supply and with a charger that is individually assigned to each charging spot and individually controlled,
that the battery replacement station (1) is designed as rack storage system (41),
that the battery modules (6) are put in storage individually based on free spots and that they are dispensed depending on their state of charge and on optimally suited capacity within a battery set comprising one or two or more battery modules (6).

4. Method for supplying energy to electrically powered vehicles according to one of the claims 1-3, **characterised in**
**that** the vehicle (2) is equipped with a module management system (27), which monitors the individual battery modules (6) and their interactions, whereby it puts the individual battery modules (6) under load depending on their respective capacity, and for which purpose it uses the data stored in the battery modules (6) or performs a load test of the battery modules (6).

5. Method according to one of the claims 1 to 4, **characterised in that** the voltage applied to the battery-side contacts (10) of the battery modules (6) is limited to the low-voltage limit of 120 V and that the battery modules (6) offer, by way of an internal division in two cell groups and a doubling of the contacts to the vehicle (2) per module, two voltage levels in a ratio of 2:1, depending on whether the contacts in the vehicle (2) are connected in series or in parallel.

6. Method according to one of the claims 1 to 5, **characterised in that** battery modules (6) with the following characteristics are used:
that the module housing comprises two tapered end pieces (14) and one central piece (15) with a largely constant cross-section, whereby the end pieces (14) preferably consist of impact-resistant synthetic material and the central piece (15) of metal, and
that the battery modules (6) can be locked to the vehicle structure by means of locking elements (18) in a positive-locking manner, and can be unlocked for replacement, whereby the locking process preferably takes place automatically during insertion on at least one locking element (18) per battery module (6), and
that preferably the bodies of the locking elements (18) are designed as feeding duct for the cooling fluid in the battery module (6) and that the locking elements (18) preferably engage in suitable recesses on the two long sides of the battery module (6), and
that the electric contacts are preferably arranged on the two long sides.

7. Method according to one of the claims 1 to 6, **characterised in that** vehicles (2) with the following characteristics are used:
the receiving spaces are integrated in a self-supporting chassis on which the bodywork structure can be placed, whereby the self-supporting chassis can absorb at least half of the flexural, impact and torsional forces applied to the chassis,
the self-supporting chassis preferably comprises a front bogie beam and a rear bogie beam (33) with bumpers (34) and a sandwich structure connected with these bogie beams (33), which structure is again composed of a base plate (29), a cover plate (31) and several connectors connecting both plates, and whereby the self-supporting chassis mainly consists of light metal or fibre-reinforced plastic,
the receiving spaces are separated from each other by vertical connectors (21), whereby the receiving spaces are either adjacent to each other or are separated from each other by about one grid dimension, and that the cover plate (31) has one or several foot pans (25) for the passengers' foot well in this intermediate area then.

8. Method according to one of the claims 1 to 7, **characterised in that** the replacement device (5) is equipped with a sensor-supported position detection mechanism of the battery modules (6) on board the vehicle (2), and that it aligns, depending on the position detection mechanism, the folding-arm robot (38) and the delivery table (39) to the vehicle position in all six axes of movement, whereby the two lifting servos (51) and the two transverse drives (53) of the delivery table (39) do not only take care of alignment in the vertical and lateral directions, but also, based on a difference between the respective travel ranges, of the necessary rotation around the horizontal Z-axis and the vertical Y-axis, and whereby rotation around the horizontal X-axis is adjusted by two tilting servos (52), and
that the two transverse rails (10) of the delivery table (39) are mounted, by means of one joint each that has three degrees of freedom of rotation, in one guiding block (57) each, which is vertically mobile thanks to a linear slide on the lifting frame (40), and whereby one of the joints also has a linear degree of freedom, and
that the floor area (3) or the travel area (22) of the guide rail (4) is fitted with distance sensors (24) which carry out a measurement of the floor clearance of the vehicle (2) during the replacement process.

9. Method according to one of the claims 1 to 8, **characterised in**
**that** the vehicle (2) is guided, by means of a guide rail (4) fixed on the floor in front of the battery replacement station (1), in a convenient position in the Z-axis, whereby the guide rail (4) guides the outer wheel flank through a lift over pointing upwards slantingly, and has a travel surface (22) inclined towards the lift over, which produces a steering torque pointing to the lift over on the front wheels, and
**that** the inclined travel surface (22) is considerably wider than the usual tire widths, whereby it is preferably inclined to the horizontal by angles between 8° and 12°, and
**that** the convenient X-position of the vehicle (2) is marked by a tire well in the travel surface (22) of the guide rail (4) or by one or two cross connectors as wheel stop (23) on the travel surface (22) of the guide rail (4), whereby the depth of the tire well or the height of the cross connectors is dimensioned in such a way that a resistance is generated on the wheel that is clearly perceptible by the driver, and
**that** preferably the guide rail (4) has, in the area in front of the output opening, a swivel-type central piece (83), which is folded down when battery modules (6) that are positioned far down are replaced.

10. Method according to one of the claims 1 to 9, **characterised in**
**that** the battery modules (6) inside the charging spots are connected with the mains by means of bidirectional AC/DC converters, and receive energy from the mains as well as feed energy in the mains, whereby feeding in is preferably realised in the medium-voltage mains, and
**that** the rack storage system (41) houses special cooling spots for the fast cooling of overheated battery modules (6), and
**that** the rack storage system (41), together with the replacement and transport devices, the control, air-conditioning and extinguishing devices as well as the charging and power electronics, is housed in a container of standard dimensions, preferably in a 20-foot container.

## Revendications

1. Procédé pour l'alimentation en énergie de véhicules (2) qui logent des modules de batteries (6) composés de batteries échangeables, avec au moins une installation d'échange (5) pour l'échange et le transport des modules de batteries (6) et avec au moins un magasin de batteries (1) pour le stockage et le chargement des modules de batteries (6), ladite installation d'échange (5) assurant l'enlèvement des modules de batteries (6) du véhicule (2) et le chargement de modules de batteries (6) dans le véhicule (2) et la connexion électrique des modules de batteries (6) entre-eux n'étant établie qu'après leur installation dans le véhicule (2) au moyen de contacts côté véhicule (20),
**caractérisé en ce**
**que** l'installation d'échange est automatisée,
**que**, en fonction du type de véhicule, il existe deux compartiments de réception ou plus pour les modules de batteries (6), l'un de ces modules de batteries (6) étant inséré dans l'un de ces compartiments,
**que** l'énergie stockée dans les modules de batteries (6) est prélevée simultanément dans le véhicule,
**que** les modules de batteries (6) sont indépendants l'un vis-à-vis de l'autre et, dans la station d'échange de batteries (1), sont combinés nouvellement avant le chargement dans le véhicule (2) pour former des ensembles de batteries dont la puissance et le nombre de batteries conviennent pour le type de véhicule respectif.

2. Procédé pour l'alimentation en énergie de véhicules (2) selon la revendication 1, **caractérisé en ce**
**que** les modules de batteries (6) individuels sont agencés dans la zone entre les essieux et à peu près au niveau des essieux d'un véhicule (2),
**que** l'installation d'échange (5) réalise l'enlèvement des modules de batteries (6) du véhicule (2) et leur installation dans le véhicule (2) latéralement, soit dans le sens transversal du véhicule (2) et du même côté du véhicule,
**que** l'installation d'échange comprend au moins un robot à plusieurs axes qui s'accouple au niveau ou près du front des modules de batteries (6) qui est orienté vers lui,
**que** l'installation d'échange (5) est dotée d'un dispositif de réception qui est mobile sur au moins trois axes (table de transfert 39) et qui reçoit et transporte plusieurs modules de batteries (6),
**que** des erreurs d'alignement entre le véhicule stationné (2) et l'installation d'échange (5) sont compensées par un ajustement multi-axes de la position de l'installation d'échange (5) en utilisant une détection de position assistée par capteurs pour la position et l'orientation du véhicule ou des modules de batteries (6) sans déplacer activement le véhicule (2) en le tournant ou poussant.

3. Procédé pour l'alimentation en énergie de véhicules (2) selon la revendication 1 ou 2, **caractérisé en ce que** les modules de batteries (6) dans la station d'échange de batteries (1) sont placés dans des emplacements de chargement individuels avec alimentation électrique séparée et dotés chacun d'un chargeur qui est affecté et réglé individuellement,
que la station d'échange de batteries (1) est réalisée sous forme de magasin à rayonnages (41),
que l'emmagasinage des modules de batteries (6) se fait individuellement en fonction des emplacements libres
et que leur distribution est réalisée en fonction de leur état de charge et de la puissance qui convient de manière optimale au sein d'un ensemble de batteries composé de deux ou plusieurs modules de batteries (6).

4. Procédé pour l'alimentation en énergie de véhicules selon l'une des revendications 1 à 3, **caractérisé en ce**
**que** le véhicule (2) est doté d'un système de gestion de modules (27) qui surveille les différents modules de batteries (6) et leur interaction pendant qu'il sollicite les différents modules de batteries (6) en fonction de leur puissance respective et qui se sert à cet effet des données enregistrées dans les modules de batteries (6) ou réalise une épreuve de charge des modules de batteries (6).

5. Procédé selon l'une des revendications 1 à 4, **caractérisé en ce que** la tension des modules de batteries (6) présente au niveau des contacts côté batterie (10) est limitée à la limite pour basses tensions s'élevant à 120 V et que, grâce à leur division intérieure en deux groupes de cellules et un redoublement des contacts vers le véhicule (2), les modules de batteries (6) offrent deux niveaux de tension d'un rapport 2:1 par module en fonction de si les contacts dans le véhicule (2) sont connectés en série ou en parallèle.

6. Procédé selon l'une des revendications 1 à 5, **caractérisé en ce que** des modules de batteries (6) ayant les caractéristiques suivantes sont utilisés :
le carter du module est composé de deux pièces d'extrémité (14) qui se rétrécissent et d'une pièce centrale (15) dont le diamètre est essentiellement constant, les pièces d'extrémité (14) étant fabriquées de préférence en plastique résistant aux chocs et la pièce centrale (15) en métal, et
les modules de batteries (6) peuvent être accouplés mécaniquement à la structure du véhicule et désaccouplés pour l'échange à l'aide d'éléments de serrage (18), le serrage s'effectuant de préférence automatiquement au moment de l'insertion au moins au niveau d'un élément de serrage (18) par module de batteries (6) et
ce sont de préférence les corps des éléments de serrage (18) qui servent de canaux d'alimentation en fluide de refroidissement pour le module de batteries (6) et les éléments de serrage (18) s'encliquètent dans des évidements correspondants de préférence au niveau des deux côtés longitudinaux du module de batteries (6) et
les contacts électriques sont agencés de préférence sur les deux côtés longitudinaux.

7. Procédé selon l'une des revendications 1 à 6, **caractérisé en ce que** des véhicules (2) avec les caractéristiques suivantes sont utilisés :
les compartiments de réception sont intégrés dans un châssis autoporteur où la carrosserie peut reposer, ledit châssis autoporteur étant en mesure de recevoir au moins la moitié des forces de flexion, de choc et de torsion qui agissent sur la carrosserie,
le châssis autoporteur se compose de préférence de supports de suspension avant et arrière (33) avec pare-chocs (34) et d'une construction en sandwich liée avec ces supports de suspension (33), cette construction étant composée d'une plaque de base (29), d'une plaque de recouvrement (31) et de plusieurs ponts qui relient ces deux plaques et le châssis autoporteur étant fabriqué essentiellement en métal léger ou en matériaux renforcés par fibres,
les compartiments de réception sont séparés l'un de l'autre par des ponts verticaux (21), les compartiments de réception étant soit contigus, soit séparés à peu près d'un pas et la plaque de recouvrement (31) présentant alors au niveau de cet écart un ou plusieurs creux (25) pour l'espace pour les pieds des passagers.

8. Procédé selon l'une des revendications 1 à 7, **caractérisé en ce que** l'installation d'échange (5) est dotée d'une détection de position des modules de batteries (6) se trouvant dans le véhicule (2) qui est assistée par capteurs et
qu'elle adapte sur tous les six axes de mouvement le robot articulé (38) et la table de transfert (38) à la position du véhicule en fonction de la détection de position, les deux servomoteurs de levage (51) et les deux entraînements transversaux (53) de la table de transfert (39) assurant non seulement l'orientation verticale et latérale, mais, par une différence des distances de déplacement respectives, également la rotation nécessaire autour de l'axe Z horizontal et de l'axe Y vertical, et la rotation autour de l'axe X horizontal étant ajustée par deux servomoteurs d'inclinaison (52) et
que les deux rails transversaux (10) de la table de transfert (39) sont logés chacun à l'aide d'une articulation qui dispose de trois niveaux de liberté de rotation dans un bloc de guidage (57) chacun qui peut être déplacé dans le sens vertical grâce à un guidage linéaire au niveau du cadre de levage (40) et l'une des articulations disposant également d'un niveau de liberté vertical et qu'il y a dans la surface de sol (3) ou dans la surface de roulement (22) du rail de guidage (4) des capteurs de distance (24) qui mesurent la garde au sol du véhicule (2) pendant l'opération d'échange.

9. Procédé selon l'une des revendications 1 à 8, **caractérisé en ce qu'**un rail de guidage (4) installé sur le sol devant la station d'échange de batteries (1), déplace le véhicule (2) à une position avantageuse sur l'axe Z, le rail de guidage (4) guidant le flanc extérieur de la roue à travers une bordure oblique et disposant d'une surface de roulement (22) inclinée vers la bordure qui génère un couple de braquage orientant les roues avant vers la bordure et que la surface de roulement (22) inclinée est sensiblement plus large que les largeurs de roue courantes et est inclinée de préférence à un angle de 8° à 12° par rapport à l'horizontale et
que la position X avantageuse du véhicule (2) est marquée par un creux de roue sur la surface de roulement (22) du rail de guidage (4) ou par une ou deux traverses formant une butée de roue (23) sur la surface de roulement (22) du rail de guidage (4), la profondeur du creux de roue ou la hauteur des traverses étant dimensionnée de sorte à générer une résistance au niveau de la roue qui est bien perceptible pour le conducteur et
que, dans la zone située devant l'ouverture de distribution, le rail de guidage (4) est doté de préférence d'une pièce centrale orientable (83) qui est rabattue vers le bas lors de l'échange de modules de batteries (6) à basse position.

10. Procédé selon l'une des revendications 1 à 9, **caractérisé en ce**
**que** les modules de batteries (6) se trouvant dans les emplacements de chargement sont connectés au réseau électrique via des convertisseurs CA/CC bidirectionnels et qu'ils consomment de l'énergie fournie par le réseau et injectent de l'énergie au réseau, ladite injection se faisant de préférence dans le réseau moyenne tension et
**que** le magasin à rayonnages (41) offre des emplacements de refroidissement spéciaux pour permettre le refroidissement rapide de modules de batteries (6) surchauffés et
**que** le magasin à rayonnages (41) est logé dans un conteneur de dimensions standard, de préférence dans un conteneur de 20 pieds, avec l'installation d'échange et de transport, avec les installations de commande, de climatisation et d'extinction, ainsi qu'avec l'électronique de chargement et de puissance.
